# EUROPÄISCHE PATENTSCHRIFT

(11) **EP 1 272 532 B1**
(45) Veröffentlichungstag und Bekanntmachung des Hinweises auf die Patenterteilung: **04.05.2005**
(21) Anmeldenummer: 01915347.7
(22) Anmeldetag: 15.03.2001
(51) Int. Cl.: C08F 4/603, C08F 10/00, C07F 5/02, C07F 5/06

(54) **SALZARTIGE CHEMISCHE VERBINDUNG, VERFAHREN ZU DEREN HERSTELLUNG UND DEREN VERWENDUNG IN KATALYSATORSYSTEMEN ZUR HERSTELLUNG VON POLYOLEFINEN**
SALINE CHEMICAL COMPOSITION, METHOD FOR PRODUCING THE SAME AND THE USE THEREOF IN CATALYST SYSTEMS FOR PRODUCING POLYOLEFINS
COMPOSE CHIMIQUE SALIN, PROCEDE POUR SA PRODUCTION ET SON UTILISATION DANS DES SYSTEMES CATALYTIQUES POUR LA PRODUCTION DE POLYOLEFINES

(30) Priorität: 17.03.2000 DE 10013043
(43) Veröffentlichungstag der Anmeldung: 08.01.2003
(73) Patentinhaber: Basell Polyolefine GmbH, 50389 Wesseling (DE)
(72) Erfinder: SCHOTTEK, Jörg, 60486 Frankfurt (DE); ERKER, Gerhard, 48159 Münster (DE); KEHR, Gerald, 48161 Münster (DE)
(86) Internationale Anmeldenummer: PCT/EP2001/002938
(87) Internationale Veröffentlichungsnummer: WO 2001/068718

(56) Entgegenhaltungen:
- WO-A-99/64476
- ROTTGER D ET AL: "Reaction of dimethylzirconocene with imidazole in the presence of tris(pentafluorophenyl) borane" JOURNAL OF ORGANOMETALLIC CHEMISTRY,CH,ELSEVIER-SEQUOIA S.A. LAUSANNE, Bd. 518, Nr. 1, 12. Juli 1996 (1996-07-12), Seiten 17-19, XP004035854 ISSN: 0022-328X
- METZLER, NILS ET AL: "Synthesis of a silylene-borane adduct and its slow conversion to a silylborane" CHEM. COMMUN. (CAMBRIDGE) (1996), (23), 2657-2658 , XP001002740
- GALSWORTHY, JANE R. ET AL: "Reactions of transition-metal oxo complexes with B(C6F5)3: crystal structures of [V{OB(C6F5)3}(acac)2], [Ti{OB(C6F5)3}(acac)2] and cis-[MoO{OB(C6F5)3}(acac)2] (acac = acetylacetonate)" J. CHEM. SOC., DALTON TRANS. (1997), (8), 1309-1313 , XP001002629
- KEHR, GERALD ET AL: "Protonation of the heterocyclic Cp-anion equivalent [pyrrolyl-B(C6F5)3]Li - formation of a useful neutral bronsted acid for the generation of homogeneous metallocene Ziegler catalysts" EUR. J. INORG. CHEM. (2001), (2), 535-538 , XP001002689

## Beschreibung

Die Erfindung betrifft salzartige chemische Verbindungen, die in Kombination mit einer Organoübergangsmetallverbindung ein Katalysatorsystem bilden können, welches vorteilhaft zur Polymerisation von Olefinen eingesetzt werden kann, Verfahren zu deren Herstellung und deren Verwendung in Katalysatorsystemen zur Herstellung von Polyolefinen.

Katalysatoren vom Ziegler-Typ auf der Basis gewinkelter Metallocene mit Metallen der Gruppe 4 des Periodensystems der Elemente bilden eine neue Generation industriell einsetzbarer Katalysatoren zur Polymerisation von α-Olefinen (H.H. Brintzinger, D. Fischer, R. Mülhaupt, R. Rieger, R. Waymouth, Angew. Chem. 1995, 107, 1255-1283).

Um ein aktives Katalysatorsystem zu erhalten, wird der Metallocenkomplex mit einem großen Überschuß an Methylaluminiumoxan (MAO) behandelt (H. Sinn, W. Kaminsky, Adv. Organomet. Chem., 1980, 18, 99). Dies hat neben den hohen Co-Katalysatorkosten den Nachteil eines hohen Aluminiumanteils im erhaltenen Polymer. Deshalb wurden neue Aktivierungsmethoden entwickelt, die ohne überstöchiometrische Menge an Aktivator auskommen.

Die Synthese von "Kation-ähnlichen" Metallocen-Polymerisationskatalysatoren ist in J. Am. Chem. Soc. 1991, 113, 3623 beschrieben. Darin erfolgt die Alkylabstraktion von einer Metallocenalkylverbindung mittels Trispentafluorphenylboran, das in einer bezogen auf das Metallocen stöchiometrischen Menge eingesetzt wird.

In EP-A-0 427 697 ist dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beschrieben. Ein Verfahren zur Herstellung von Salzen der allgemeinen Formel LMX⁺ XA⁻ nach dem oben beschriebenen Prinzip ist in EP-A-0 520 732 beschrieben.

EP-A-0 558 158 beschreibt zwitterionische Katalysatorsysteme, die aus Metallocendialkyl-Verbindungen und Salzen der Form [R₃NH]⁺[BPh₄]⁻ hergestellt werden. Die Umsetzung eines solchen Salzes mit z.B. Cp₂*ZrMe₂ liefert durch Protolyse unter Methanabspaltung intermediär ein Zirkonocenmethyl-Kation. Dieses reagiert über C-H-Aktivierung zum Zwitterion Cp₂*Zr⁺-(m-C₆H₄)-BPh₃⁻ ab. Das Zr-Atom ist dabei kovalent an ein Kohlenstoffatom des Phenylringes gebunden und wird über eine agostische Wasserstoffbindung stabilisiert.

In US-A-5,348,299 sind entsprechende Systeme beschrieben, wobei Dimethylaniliniumsalze mit perfluorierten Tetraphenylboraten verwendet werden.
Zusätzlich zu ihrer aktivierenden Wirkung haben die Borat-Salze über ihre Ligandensphäre einen großen Einfluß auf das Reaktionsgleichgewicht. Große sperrige Liganden verhindern weitgehend die Dimerisierung der Metalloceniumfragmente und verschieben somit die Gleichgewichtslage auf die Seite der katalytisch aktiven Spezies. Die bislang beschriebenen einkernigen Borat-Anionen sind durch vier Aryl-Liganden charakterisiert, und können durch den Einbau von sperrigen Gruppen am Liganden Einfluß auf das Reaktionsgleichgewicht nehmen (WO 95/24268). Nachteile dieser Systeme sind die aufwendigen Synthesen, sowie die extreme Empfindlichkeit der resultierenden Metallocenium-Komplexe.

Hinzu kommt, daß die meisten Ausgangsstoffe im Verdacht stehen, krebserregend, erbgutverändernd oder extrem toxisch zu sein. Desweiteren erfolgt bei der Bildung der kationischen Metallocenspezies die Freisetzung von Aminen, welche aufgrund der Toxidität vieler Amine nicht wünschenswert ist. Die zum Teil extreme Unlöslichkeit der bisher beschriebenen Ammonium-Tetraphenylborate führt zudem nur zu unvollständig umgesetzten Katalysatorsystemen. Dies hat unmittelbare Auswirkungen auf die Produktivitäten der Katalysatorsysteme in Hinblick auf die eingesetzte Menge an Metallocen und Cokatalysator. Hohe Kosten und somit eine nur begrenzte wirtschaftliche Nutzung sind die Folge.

In der WO 99/64476 werden ionische Katalysatorsysteme beschrieben, die mit einem Lewis-Säure-Base-Komplex aktiviert werden.

Die Aufgabe der Erfindung bestand daher darin, eine chemische Verbindung bereitzustellen, welche die Vorteile sperriger Liganden beinhaltet, dabei aber die Nachteile der bekannten Verbindungen vom Ammoniumsalz-Typ ausschließt.

Demgemäß wurden die salzartigen chemischen Verbindungen der Formel (I) gefunden. Gegenstand der Erfindung sind somit Verbindungen der Formel

(C₆R¹ ₅)₃MR² (I)

worin die Reste
- R¹: gleich oder verschieden sind und ein Wasserstoffatom, ein Halogenatom, C₁-C₂₀-Alkyl, C₆-C₁₄-Aryl, C₁-C₁₀-Alkoxy, C₂-C₁₀-Alkenyl, C₇-C₂₀-Arylalkyl, C₇-C₂₀-Alkylaryl, C₆-C₁₀-Aryloxy, C₁-C₁₀-Halogenalkyl, C₆-C₁₀-Halogenaryl, C₂-C₁₀-Alkinyl oder C₃-C₂₀-Alkylsilyl,
- M: ein Element der III. Hauptgruppe des Periodensystems der Elemente, und
- R²: einen gegebenenfalls substituierten Heterocyclus bedeutet.

Die vorliegende Erfindung betrifft außerdem ein Verfahren zur Herstellung der erfindungsgemäßen Verbindungen der Formel (I), in dem zunächst Verbindungen von Heterocyclen R² mit Elementen der I. oder II. Hauptgruppe des Periodensystems der Elemente mit Verbindungen der Formel (C₆R¹₅)₃M in einem Lösungsmittel zu Verbindungen der Formel [(C₆R¹₅)₃MR²]⁻ umgesetzt werden, die anschließend durch Umsetzung mit einem Protonendonor protoniert werden, wobei R¹, M und R² die in Formel (I) angegebene Bedeutung haben.

Die Erfindung betrifft außerdem Katalysatorsysteme, welche mindestens eine Organometallübergangsverbindung (A), mindestens eine Verbindung der Formel (I), gegebenenfalls eine Alkylverbindung (B) eines Elementes der III. oder IV. Hauptgruppe des Periodensystems der Elemente und gegebenenfalls mindestens eine Trägerkomponente (C) enthalten.

Die vorliegende Erfindung betrifft außerdem ein Verfahren zur Polymerisation von Olefinen, in dem ein erfindungsgemäßes Katalysatorsystem enthaltend mindestens eine Organometallübergangsverbindung (A), mindestens eine chemische Verbindung der Formel (I), gegebenenfalls eine Alkylverbindung (B) eines Elementes der III. oder IV. Hauptgruppe des Periodensystems der Elemente und gegebenenfalls mindestens eine Trägerkomponente (C) eingesetzt wird. Unter dem Begriff Polymerisation wird eine Homopolymerisation wie auch eine Copolymerisation verstanden.

Erfindungsgemäß bevorzugt sind Verbindungen der Formel (I), in denen die Elemente M Aluminium und Bor bedeuten, wovon Bor wiederum besonders bevorzugt ist.

In einer bevorzugten Ausführungsform der Verbindungen der Formel (I) sind die Reste R¹ unabhängig voneinander Halogenatome wie insbesondere Fluor oder Chlor, wovon wiederum Fluor besonders bevorzugt ist.

Besonders bevorzugte halogenierte Verbindungen der Formel (I) enthalten als
(C₆R¹ ₅)-Rest Pentafluorophenyl, 2,3,4,6-Tetrafluorophenyl, 2,3,5,6-Tetrafluorophenyl, 2,3,5-Trifluorophenyl, 2,3,6-Trifluorophenyl, 1,3-Difluorophenyl, 2,3,5,6-Tetrafluoro-4-methylphenyl oder 2,3,4,6-Tetrafluoro-5-methylphenyl.

In den Verbindungen der Formel (I) weist der Heterocyclus im allgemeinen eine positive Teilladung auf.

Erfindungsgemäß bevorzugte Heterocyclen R2 sind 5- oder 6-Ring-Heterocyclen. Vorzugsweise enthalten die Heterocyclen R2 ein oder zwei Heteroatome. Bevorzugtes Heteroatom ist hierbei das Stickstoffatom.

Erfindungsgemäß bevorzugte Heterocylen sind Pyrrolium, Indolium oder Imidazolium. Diese können in den Verbindungen der Formel (I) substituiert oder unsubstituiert vorliegen.

In erfindungsgemäß bevorzugten Verbindungen der Formel (I) ist der Heterocyclus R² unsubstituiert oder substituiert mit mindestens einem Halogenatom, C₁-C₂₀-Alkyl, C₆-C₁₄-Aryl, C₁-C₁₀-Alkoxy, C₂-C₁₀- Alkenyl, C₇-C₂₀-Arylalkyl, C₇-C₂₀-Alkylaryl, C₆-C₁₀-Aryloxy, C₁-C₂₀-Halogenalkyl, C₆-C₁₄-Halogenaryl, C₂-C₁₀-Alkinyl oder C₃-C₂₀-Alkylsilyl. Besonders bevorzugt ist R² unsubstituiert oder substituiert mit C₁-C₂₀-Alkyl, wie Methyl, Ethyl, Isopropyl, tert. Butyl, C₆-C₁₄-Aryl, oder Halogenatomen, wie Fluor oder Chlor, bevorzugt Fluor. Ganz besonders bevorzugt ist R² unsubstituiert. Erfindungsgemäß besonders bevorzugte chemische Verbindungen der Formel (I) sind:
Pyrrolium[tris(pentafluorophenyl)borat]
Pyrrolium [tris (heptafluoronaphthyl)borat]
2, 4-Methyl-Pyrrolium[tris(pentafluorophenyl)borat]
2, 4-Fluoro-Pyrrolium[tris(pentafluorophenyl)borat]
2, 4-Methyl-Pyrrolium[tris(heptafluoronaphthyl)borat]
2, 4-tert.butyl-Pyrrolium[tris(pentafluorophenyl)borat]
2, 4-tert.butyl-Pyrrolium[tris(heptafluoronaphthyl)borat]
2, 4-Isopropyl-Pyrrolium[tris(pentafluorophenyl)borat]
2, 4-Isopropyl-Pyrrolium[tris(heptafluoronaphthyl)borat]
3, 4-Methyl-Pyrrolium[tris(pentafluorophenyl)borat]
3, 4-Fluoro-Pyrrolium[tris (pentafluorophenyl)borat]
3, 4-Methyl-Pyrrolium[tris(heptafluoronaphthyl)borat]
3, 4-tert.butyl-Pyrrolium[tris(pentafluorophenyl)borat]
3, 4-tert.butyl-Pyrrolium[tris(heptafluoronaphtyl)borat]
3, 4-Isopropyl-Pyrrolium[tris(pentafluorophenyl)borat]
3, 4-Isopopyl-Pyrrolium[tris(heptafluoronaphtyl)borat]
2,-Methyl-Pyrrolium[tris(pentafluorophenyl)borat]
3-Methyl-Pyrrolium(tris(heptafluoronaphtyl)borat]
2-tert.butyl-Pyrrolium[tris(pentafluorophenyl)borat]
3-tert.butyl-Pyrrolium[tris(heptafluoronaphtyl)borat]
2-Isopropyl-Pyrrolium[tris(pentafluorophenyl)borat]
3-Isopopyl-Pyrrolium[tris(heptafluoronaphtyl)berat]
Pyrrolium[tris(2, 3, 5, 6, 7, 8 hexafluoronaphtyl)borat]
Pyrrolium[tris(2, 4, 5, 6, 7, 8 hexafluoronaphtyl)borat]
Pyrrolium[tris( 3, 4, 5, 6, 7, 8 hexafluoronaphtyl)borat]
Pyrrolium[tris( 2, 3, 4, 6, 7, 8 hexafluoronaphtyl)borat]
Pyrrolium[tris( 2, 3, 4, 5, 7, 8 hexafluoronaphtyl)borat]
Pyrrolium[tris(2, 3, 5, 6, 7, 8 hexafluoro-4-methylnaphtyl)borat]
Pyrrolium[tris(2, 4, 5, 6, 7, 8 hexafluoro-3-methylnaphtyl)borat]
Pyrrolium[tris( 3, 4, 5, 6, 7, 8 hexafluoro-2-methylnaphtyl)borat]
Pyrrolium[tris( 2, 3, 4, 6, 7, 8 hexafluoro-5-methylnaphtyl)borat]
Pyrrolium[tris( 2, 3, 4, 5, 7, 8 hexafluoro-6-methylnaphtyl)borat]
Pyrrolium [tris (nonafluorobiphenyl) borat]
Pyrrolium[tris(2, 2',3, 3', 5, 5', 6, 6' octafluorobiphenyl)borat]
Pyrrolium[tris(3, 3', 4, 4', 5, 5', 6, 6' octafluorobipheny1)borat]
Pyrrolium[tris(2, 2',4, 4', 5, 5', 6, 6' octafluorobiphenyl)borat]
Pyrrolium[tris(2, 2',3, 3', 4, 4', 6, 6' octafluorobiphenyl)borat]
Pyrrolium[tris(2, 2',3, 3', 4, 4', 5, 5' octafluorobiphenyl)borat]
Pyrrolium[tris(2, 2',3, 3', 5, 5', 6, 6' octafluorobiphenyl)borat]
Pyrrolium[tris(3, 3', 4, 4', 5, 5', 6, 6' octafluorobiphenyl)borat]
Pyrrolium[tris(2, 2',4, 4', 5, 5', 6, 6' octafluorobiphenyl)borat]
Pyrrolium[tris(2, 2',3, 3', 4, 4', 6, 6' octafluoro- 5, 5'-methybiphenyl)borat]
Pyrrolium[tris(2, 2',3, 3', 4, 4', 5, 5' octafluoro-6, 6'-methybiphenyl)borat]
Pyrrolium[tris(2, 2',3, 3', 5, 5', 6, 6' octafluoro-4, 4'-biphenyl)borat]
Pyrrolium[tris(3, 3', 4, 4', 5, 5', 6, 6' octafluoro-2, 2'-biphenyl)borat]
Pyrrolium[tris(2, 2',4, 4', 5, 5', 6, 6' octafluoro-3, 3'-biphenyl)borat]
Pyrrolium[tris(2, 3, 4, 6 tetrafluorophenyl)borat],
Pyrrolium[tris (2, 3, 5, 6 tetrafluorophenyl)borat],
Pyrrolium[tris(2, 3, 5 trifluororphenyl)borat], Pyrrolium[tris (2, 3, 6 trifluororphenyl)borat], Pyrrolium[tris(1, 3 difluororphenyl)borat], Pyrrolium[tris(2, 3, 5, 6 tetrafluoro-4-methylphenyl)borat],
Pyrrolium[tris(2, 3, 4, 6 tetrafluoro-5-methylphenyl)borat],
Pyrrolium[tris(4-methoxy-2, 3, 5, 6 tetrafluorophenyl)borat],
Pyrrolium[tris(3-methoxy-2, 4, 5, 6 tetrafluorophenyl)borat],
Pyrrolium[tris(2-methoxy-3, 4, 5, 6 tetrafluorophenyl)borat),
Pyrrolium[tris(2, 6 difluoro-3-methylphenyl)borat,
Pyrrolium[tris(2, 4 difluoro-5-methylphenyl)borat,
Pyrrolium[tris(3, 5 difluoro-2-methylphenyl)borat.

Im erfindungsgemäßen Verfahren zur Herstellung der Verbindungen (I) werden als Elemente der I. oder II. Hauptgruppe des Periodensystems bevorzugt Lithium, Natrium, Kalium und/oder Magnesium eingesetzt. Als Lösungsmittel im erfindungsgemäßen Verfahren sind insbesondere Kohlenwasserstoffe und Ether geeignet. Besonders bevorzugte Lösungsmittel sind Ether wie Diethylether und THF und Kohlenwasserstoffe, insbesondere Toluol. Erfindungsgemäße Protonendonoren sind insbesondere anorganische oder organische Säuren, wobei anorganische Säuren, insbesondere HCl und H₂SO₄, bevorzugt eingesetzt werden.

In den erfindungsgemäßen Katalysatorsystemen werden als Organoübergangsmetallverbindung (A) beispielsweise Metallocenverbindungen eingesetzt. Diese können z.B. verbrückte oder unverbrückte Biscyclopentadienylkomplexe sein, wie sie beispielsweise in EP-A-0 129 368, EP-A-0 561 479, EP-A-0 545 304 und EP-A-0 576 970 beschrieben sind. Geeignet sind außerdem Monocyclopentadienylkomplexe, wie verbrückte Amidocyclopentadienylkomplexe, die beispielsweise in EP-A-0 416 815 beschrieben sind, sowie mehrkernige Cyclopentadienylkomplexe wie sie beispielsweise in EP-A-0 632 063 beschrieben sind. Außerdem sind geeignet π-Ligand substituierte Tetrahydropentalene wie beispielsweise in EP-A-0 659 758 beschrieben oder π-Ligand substituierte Tetrahydroindene wie beispielsweise in EP-A-0 661 300 beschrieben. Außerdem können Organometallverbindungen eingesetzt werden, in denen der komplexierende Ligand keine Cyclopentadienylreste enthält. Beispiele hierfür sind Diamin-Komplexe der III. und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben werden. Außerdem können Diimin-Komplexe der VIII. Nebengruppe des Periodensystems der Elemente (z.B. Ni²⁺ oder Pd²⁺ Komplexe), wie sie bei Brookhart et al, J. Am. Chem. Soc. 1995, 117, 6414 und Brookhart et al, J. Am. Chem. Soc., 1996, 118, 267 beschrieben werden, eingesetzt werden. Ferner lassen sich 2,6-bis(imino)pyridyl-Komplexe der VIII. Nebengruppe des Periodensystems der Elemente (z.B. Co²⁺ oder Fe²⁺ Komplexe), wie sie bei Brookhart et al, J. Am. Chem. Soc. 1998, 120, 4049 und Gibson et al, Chem. Commun. 1998, 849 beschrieben werden, einsetzen. Weiterhin können Metallocenverbindungen eingesetzt werden, deren komplexierender Ligand Heterocyclen enthält. Beispiele hierfür sind in WO 98/22486 beschrieben.

Bevorzugte Metallocenverbindungen sind unverbrückte oder verbrückte Verbindungen der Formel (II), 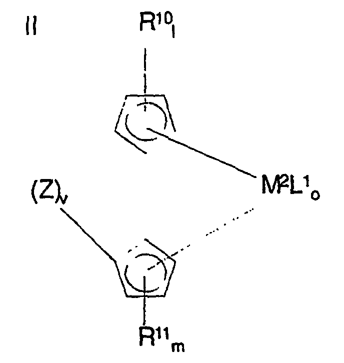 worin
- M²: ein Metall der III., IV., V. oder VI. Nebengruppe des Periodensystems der Elemente ist, insbesondere Ti, Zr oder Hf,
- R¹⁰: gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹⁰ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹⁰ können so miteinander verbunden sein, daß die Reste R¹⁰ und die sie verbindenden Atome des Cyclopentadienylringes ein C₄-C₂₄-Ringsystem bilden, welches seinerseits substituiert sein kann,
- R¹¹: gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹¹ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₅-C₂₄-Alkylheteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹¹ können so miteinander verbunden sein, daß die Reste R¹¹ und die sie verbindenden Atome des Cyclopentadienylringes ein C₄-C₂₄-Ringsystem bilden, welches seinerseits substituiert sein kann,
- 1: gleich 5 für v = 0, und 1 gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR¹⁶, SR¹⁶, OSi(R¹⁶)₃ , Si(R¹⁶)₃ , P(R¹⁶)₂ oder N(R¹⁶)₂ bedeuten, worin R¹⁶ ein Halogenatom, eine C₁-C₁₀-Alkylgruppe, eine halogenierte C₁-C₁₀-Alkylgruppe, eine C₆-C₂₀-Arylgruppe oder eine halogenierte C₆-C₂₀-Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M²R¹³R¹⁴, worin M² Kohlenstoff, Silizium, Germanium Bor oder Zinn ist und R¹³ und R¹⁴ gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂ sowie die entsprechenden Verbindungen mit 2,2-(1-methyl-ethandiyl)-, 1,2-(1,1-dimethyl-ethandiyl)- und 1,2(1,2-dimethyl-ethandiyl)-Brücke. Z kann auch mit einem oder mehreren Resten R¹⁰ und/oder R¹¹ ein mono- oder polycyclisches Ringsystem bilden.

Bevorzugt sind chirale verbrückte Metallocenverbindungen der Formel (II), insbesondere solche, in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7- oder 2,4,5,6-Stellung, mit C₁-C₂₀-kohlenstoffhaltigen Gruppen, insbesondere mit C₁-C₁₀-Alkyl oder C₆-C₂₀-Aryl, wobei auch zwei oder mehr Substituenten des Indenylrings zusammen ein Ringsystem bilden können.

Chirale verbrückte Metallocenverbindungen der Formel (II) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis (2-methyl-indenyl) zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis (2-methyl-4-t-butyl-indenyl) zirkoniumdichlorid
Dimethylsilandiylbis (2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4-acenaphthyl-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl (phenyl) silandiylbis (2-methyl-4-phenyl-indenyl) zirkoniumdichlorid
Methyl(phenyl)silandiylbis(2-methyl-4,6 diisopropyl-indenyl) zirkoniumdichlorid
Methyl (phenyl)silandiylbis(2-methyl-4-isopropyl-indenyl) zirkoniumdichlorid
Methyl (phenyl)silandiylbis(2-methyl-4,5-benzo-indenyl)zirkoniumdichlorid
Methyl (phenyl)silandiylbis(2-methyl-4,5-(methylbenzo)-indenyl)zirkoniumdi-chlorid
Methyl (phenyl)silandiylbis(2-methyl-4,5-(tetramethylbenzo)-indenyl)
   zirkoniumdichlorid
Methyl (phenyl)silandiylbis(2-methyl-4- -acenaphth-indenyl) zirkoniumdichlorid
Methyl (phenyl)silandiylbis(2-methyl-indenyl)zirkoniumdichlorid
Methyl (phenyl)silandiylbis(2-methyl-5-isobutyl-indenyl)zirkoniumdichlorid
1,2-Ethandiylbis(2-methyl-4-phenyl-indenyl) zirkoniumdichlorid
1,4-Butandiylbis(2-methyl-4-phenyl-indenyl)zirkoniumdichlorid
1,2-Ethandiylbis(2-methyl-4,6 diisopropyl-indenyl) zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4- (η⁵-3'-Isopropyl-cyclopentadienyl)-4, 6, 6-trimethyl- (η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4- (η⁵-3'-Methylcyclopentadienyl)-4,7,7-trimethyl-(η⁵-4,5,6,7-tetrahydroindenyl)]-dichlorotitan
4- (η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl) -4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyldichlorotitan
(Tertbutylamido)-(tetramethyl-η⁵-cyclopentadienyl)-1,2-ethandiyldichlorotitan-dichlorotitan
(Methylamido)-(tetramethyl-η⁵-cyclopentadienyl)-dimethylsilyldichlorotitan
(Methylamido)-(tetramethyl-η⁵-cyclopentadienyl)-1,2-ethandiyldichlorotitan
(Tertbutylamido)-(2,4-dimethyl-2,4-pentadien-1-yl)-dimethylsilyldichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro- [1-[bis (η⁵-1H-inden-1-yliden)methylsilyl]-3-η⁵-cyclopenta-2,4-dien-1-yliden)-3-η⁵-9H-fluoren-9-yliden)butan]dizirkonium
Tetrachloro- [2- [bis (η⁵-2-methyl-1H-inden-1-yliden)methoxysilyl]-5-(η⁵-2,3,4,5-tetramethylcyclopenta-2,4-dien-1-yliden)-5- (η⁵-9H-fluoren-9-yliden)hexan] di-zirkonium
Tetrachloro- [1-[bis (η⁵-1H-inden-1-yliden)methylsilyl]-6- (η⁵-cyclopenta-2,4-dien-1-yliden)-6-(η⁵-9H-fluoren-9-yliden)-3-oxaheptan] di-zirkonium
Dimethylsilandiylbis(2-methyl-4-(tert-butyl-phenyl-indenyl)-zirkoniumdichlorid
Dimethylsilandiylbis(2-methyl-4-(4-methyl-phenyl-indenyl) zirkoniumdichlorid
Dimethylsilandiylbis(2-methyl-4-(4-ethyl-phenyl-indenyl) zirkoniumdichlorid
Dimethylsilandiylbis(2-methyl-4-(4-trifluormethyl-phenyl-indenyl) zirkoniumdichlorid
Dimethylsilandiylbis(2-methyl-4-(4-methoxy-phenyl-indenyl) zirkoniumdichlorid
Dimethylsilandiylbis(2-ethyl-4-(4-tert-butyl-phenyl-indenyl) zirkoniumdichlorid
Dimethylsilandiylbis(2-ethyl-4-(4-methyl-phenyl-indenyl) zirkoniumdichlorid
Dimethylsilandiylbis(2-ethyl-4-(4-ethyl-phenyl-indenyl)zirkoniumdichlorid
Dimethylsilandiylbis(2-ethyl-4-(4-trifluormethyl-phenyl-indenyl) zirkoniumdichlorid
Dimethylsilandiylbis(2-ethyl-4-(4-methoxy-phenyl-indenyl) zirkoniumdichlorid
Dimethylsilandiylbis(2-methyl-4-(4-tert-butyl-phenyl-indenyl) zirkoniumdimethyl
Dimethylsilandiylbis(2-methyl-4-(4-methyl-phenyl-indenyl) zirkoniumdimethyl
Dimethylsilandiylbis(2-methyl-4-(4-ethyl-phenyl-indenyl) zirkoniumdimethyl
Dimethylsilandiylbis(2-methyl-4-(4-trifluormethyl-phenyl-indenyl) zirkoniumdimethyl
Dimethylsilandiylbis(2-methyl-4-(4-methoxy-phenyl-indenyl) zirkoniumdimethyl
Dimethylsilandiylbis(2-ethyl-4-(4-tert-butyl-phenyl-indenyl) zirkoniumdimethyl
Dimethylsilandiylbis(2-ethyl-4-(4-methyl-phenyl-indenyl) zirkoniumdimethyl
Dimethylsilandiylbis(2-ethyl-4-(4-ethyl-phenyl-indenyl)zirkoniumdiethyl
Dimethylsilandiylbis(2-ethyl-4-(4-trifluormethyl-phenyl-indenyl) zirkoniumdimethyl
Dimethylsilandiylbis(2-ethyl-4-(4-methoxy-phenyl-indenyl) zirkoniumdimethyl
Dimethylsilandiylbis(2-methyl-4-(4'-tert.-butyl-phenyl)-indenyl) zirkoniumdichlorid
Dimethylsilandiylbis(2-methyl-4-(4'-tert.-butyl-phenyl)-indenyl) hafnuimdichlorid
Dimethylsilandiylbis(2-methyl-4-(4'-tert.-butyl-phenyl)-indenyl) titandichlorid
Dimethylsilandiylbis(2-methyl-4-(4'-methyl-phenyl)-indenyl) zirkoniumdichlorid
Dimethylsilandiylbis(2-methyl-4-(4'-n-propyl-phenyl)-indenyl) zirkoniumdichlorid
Dimethylsilandiylbis(2-methyl-4-(4'-n-butyl-phenyl)-indenyl) zirkoniumdichlorid
Dimethylsilandiylbis(2-methyl-4-(4'-hexyl-phenyl)-indenyl) zirkoniumdichlorid
Dimethylsilandiylbis(2-methyl-4-(4'-sec-butyl-phenyl)-indenyl) zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl) zirkoniumdichlorid
Dimethylsilandiylbis(2-ethyl-4-(4'-ethyl-phenyl)-indenyl) zirkoniumdichlorid
Dimethylsilandiylbis(2-ethyl-4-(4'-n-propyl-phenyl)-indenyl) zirkoniumdichlorid
Dimethylsilandiylbis(2-ethyl-4-(4'-n-butyl-phenyl)-indenyl) zirkoniumdichlorid
Dimethylsilandiylbis(2-ethyl-4-(4'-hexyl-phenyl)-indenyl) zirkoniumdichlorid
Dimethylsilandiylbis(2-ethyl-4-(4'-pentyl-phenyl)-indenyl) zirkoniumdichlorid
Dimethylsilandiylbis(2-ethyl-4-(4'-cyclohexyl-phenyl)-indenyl) zirkoniumdichlorid
Dimethylsilandiylbis(2-ethyl-4-(4'-sec-butyl-phenyl)-indenyl) zirkoniumdichlorid
Dimethylsilandiylbis(2-ethyl-4-(4'-tert.-butyl-phenyl)-indenyl) zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl) zirkoniumdichlorid
Dimethylsilandiylbis(2-n-propyl-4-(4'-ethyl-phenyl)-indenyl) zirkoniumdichlorid
Dimethylsilandiylbis(2-n-propyl-4-(4'-iso-propyl-phenyl)-indenyl) zirkoniumdichlorid
Dimethylsilandiylbis(2-n-propyl-4-(4'-n-butyl-phenyl)-indenyl) zirkoniumdichlorid
Dimethylsilandiylbis(2-n-propyl-4-(4'-hexyl-phenyl)-indenyl) zirkoniumdichlorid
Dimethylsilandiylbis(2-n-propyl-4-(4'-cyclohexyl-phenyl)-indenyl) zirkoniumdichlorid
Dimethylsilandiylbis(2-n-propyl-4-(4'-sec-butyl-phenyl)-indenyl) zirkoniumdichlorid
Dimethylsilandiylbis(2-n-propyl-4-(4'-tert.-butyl-phenyl)-indenyl)zirkoniumdichlorid
Dimethylsilandiylbis (2-n-butyl-4-phenyl)-indenyl)zirkoniumdichlorid
Dimethylsilandiylbis(2-n-butyl-4-(4'-methyl-phenyl)-indenyl) zirkoniumdichlorid
Dimethylsilandiylbis(2-n-butyl-4-(4'-ethyl-phenyl)-indenyl) zirkoniumdichlorid
Dimethylsilandiylbis(2-n-butyl-4-(4'-n-propyl-phenyl)-indenyl) zirkoniumdichlorid
Dimethylsilandiylbis(2-n-butyl-4-(4'-iso-propyl-phenyl)-indenyl) zirkoniumdichlorid
Dimethylsilandiylbis(2-n-butyl-4-(4'-n-butyl-phenyl)-indenyl) zirkoniumdichlorid
Dimethylsilandiylbis(2-n-butyl-4-(4'-hexyl-phenyl)-indenyl) zirkoniumdichlorid
Dimethylsilandiylbis(2-n-butyl-4-(4'-cyclohexyl-phenyl)-indenyl) zirkoniumdichlorid
Dimethylsilandiylbis(2-n-butyl-4-(4'-sec-butyl-phenyl)-indenyl) zirkoniumdichlorid
Dimethylsilandiylbis(2-n-butyl-4-(4'-tert.-butyl-phenyl)-indenyl) zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl) zirkoniumdichlorid
Dimethylsilandiylbis(2-hexyl-4-(4'-ethyl-phenyl)-indenyl) zirkoniumdichlorid
Dimethylsilandiylbis(2-hexyl-4-(4'-n-propyl-phenyl)-indenyl) zirkoniumdichlorid
Dimethylsilandiylbis(2-hexyl-4-(4'-iso-propyl-phenyl)-indenyl) zirkoniumdichlorid
Dimethylsilandiylbis(2-hexyl-4-(4'-n-butyl-phenyl)-indenyl) zirkoniumdichlorid
Dimethylsilandiylbis(2-hexyl-4-(4'-hexyl-phenyl)-indenyl) zirkoniumdichlorid
Dimethylsilandiylbis(2-hexyl-4-(4'-cyclohexyl-phenyl)-indenyl) zirkoniumdichlorid
Dimethylsilandiylbis(2-hexyl-4-(4'-sec-butyl-phenyl)-indenyl) zirkoniumdichlorid
Dimethylsilandiylbis(2-hexyl-4-(4'-tert.-butyl-phenyl)-indenyl) zirkoniumdichlorid
Dimethylsilandiylbis(2-methyl-4-(4'-tert.-butyl-phenyl)-indenyl) zirkoniumbis(dimethylamid)
Dimethylsilandiylbis(2-ethyl-4-(4'-tert.-butyl-phenyl)-indenyl) zirkoniumdibenzyl
Dimethylsilandiylbis(2-methyl-4-(4'-tert.-butyl-phenyl)-indenyl) zirkoniumdimethyl
Dimethylgermandiylbis(2-ethyl-4-(4'-tert.-butyl-phenyl)-indenyl) zirkoniumdichlorid
Dimethylgermandiylbis(2-ethyl-4-(4'-tert.-butyl-phenyl)-indenyl) hafniumdichlorid
Dimethylgermandiylbis(2-propyl-4-(4'-tert.-butyl-phenyl)-indenyl) titandichlorid
Dimethylgermandiylbis(2-methyl-4-(4'-tert.-butyl-phenyl)-indenyl) zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis (2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4--phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl) zirkoniumdichlorid
Methylethylidenbis(2-ethyl-4-(4'-tert.-butyl-phenyl)-indenyl) hafniumdichlorid
Phenylphosphandiyl(2-ethyl-4-(4'-tert.-butyl-phenyl)-indenyl) zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid
Dimethylsilandiyl (2-methyl-4-azapentalen) (2-methyl-4-(4'-methylphenyl-indenyl) zirkoniumdichlorid
Dimethylsilandiyl(2-methyl-5-azapentalen)(2-methyl-4-(4'-methylphenyl-indenyl) zirkoniumdichlorid
Dimethylsilandiyl(2-methyl-6-azapentalen)(2-methyl-4-(4'-methylphenyl-indenyl) zirkoniumdichlorid
Dimethylsilandiyl(2-methyl-N-phenyl-4-azapentalen)(2-methyl-4-(4'-methylphenyl-indenyl) zirkoniumdichlorid
Dimethylsilandiyl(2-methyl-N-phenyl-5-azapentalen)(2-methyl-4-(4'-methylphenyl-indenyl) zirkoniumdichlorid
Dimethylsilandiyl(2-methyl-N-phenyl-6-azapentalen)(2-methyl-4-(4'-methylphenyl-indenyl) zirkoniumdichlorid
Dimethylsilandiyl(2,5-dimethyl-4-azapentalen)(2-methyl-4-(4'-methylphenyl-indenyl) zirkoniumdichlorid
Dimethylsilandiyl(2,5-dimethyl-6-azapentalen)(2-methyl-4-(4,-methylphenyl-indenyl) zirkoniumdichlorid
Dimethylsilandiyl(2,5-dimethyl-N-phenyl-4-azapentalen) (2-methyl-4-(4'-methylphenyl-indenyl) zirkoniumdichlorid
Dimethylsilandiyl(2,5-dimethyl-N-phenyl-6-azapentalen) (2-methyl-4-(4'-methylphenyl-indenyl) zirkoniumdichlorid
Dimethylsilandiyl(2-methyl-4-thiapentalen)(2-methyl-4- (4'-methylphenyl-indenyl) zirkoniumdichlorid
Dimethylsilandiyl(2-methyl-5-thiapentalen)(2-methyl-4-(4'-methylphenyl-indenyl)zirkoniumdichlorid
Dimethylsilandiyl(2-methyl-6-thiapentalen)(2-methyl-4-(4'-methylphenyl-indenyl)zirkoniumdichlorid
Dimethylsilandiyl(2,5-dimethyl-4-thiapentalen)(2-methyl-4-(4'-methylphenyl-indenyl) zirkoniumdichlorid
Dimethylsilandiyl(2,5-dimethyl-6-thiapentalen)(2-methyl-4-(4'-methylphenyl-indenyl) zirkoniumdichlorid
Dimethylsilandiyl(2-methyl-4-oxapentalen)(2-methyl-4-(4'-methylphenyl-indenyl)zirkoniumdichlorid
Dimethylsilandiyl(2-methyl-5-oxapentalen)(2-methyl-4-(4'-methylphenyl-indenyl)zirkoniumdichlorid
Dimethylsilandiyl(2-methyl-6-oxapentalen)(2-methyl-4-(4'-methylphenyl-indenyl)zirkoniumdichlorid
Dimethylsilandiyl(2,5-dimethyl-4-oxapentalen)(2-methyl-4 -(4'-methylphenyl-indenyl) zirkoniumdichlorid
Dimethylsilandiyl(2,5-dimethyl-6-oxapentalen)(2-methyl-4-(4'-methylphenyl-indenyl) zirkoniumdichlorid
Dimethylsilandiyl(2-methyl-4-azapentalen)(2-methyl-4-(4'-ethylphenyl-indenyl) zirkoniumdichlorid
Dimethylsilandiyl (2-methyl-5-azapentalen) (2-methyl-4-(4'-ethylphenyl-indenyl) zirkoniumdichlorid
Dimethylsilandiyl (2-methyl-6-azapentalen) (2-methyl-4-(4'-ethylphenyl-indenyl) zirkoniumdichlorid
Dimethylsilandiyl (2-methyl-N-phenyl-4-azapentalen) (2-methyl-4-(4'-ethylphenyl-indenyl) zirkoniumdichlorid
Dimethylsilandiyl(2-methyl-N-phenyl-5-azapentalen) (2-methyl-4-(4'-ethylphenyl-indenyl) zirkoniumdichlorid
Dimethylsilandiyl (2-methyl-N-phenyl-6-azapentalen) (2-methyl-4-(4'-ethylphenyl-indenyl) zirkoniumdichlorid
Dimethylsilandiyl(2,5-dimethyl-4-azapentalen) (2-methyl-4-(4'-ethylphenyl-indenyl) zirkoniumdichlorid
Dimethylsilandiyl(2,5-dimethyl-6-azapentalen) (2-methyl-4-(4'-ethylphenyl-indenyl) zirkoniumdichlorid
Dimethylsilandiyl(2,5-dimethyl-N-phenyl-4-azapentalen) (2-methyl-4-(4'-ethylphenyl-indenyl) zirkoniumdichlorid
Dimethylsilandiyl (2,5-dimethyl-N-phenyl-6-azapentalen) (2-methyl-4-(4'-ethylphenyl-indenyl) zirkoniumdichlorid
Dimethylsilandiyl(2-methyl-4-thiapentalen) (2-methyl-4-(4'-ethylphenyl-indenyl)zirkoniumdichlorid
Dimethylsilandiyl(2-methyl-5-thiapentalen) (2-methyl-4-(4'-ethylphenyl-indenyl)zirkoniumdichlorid
Dimethylsilandiyl(2-methyl-6-thiapentalen)(2-methyl-4-(4,-ethylphenyl-indenyl) zirkoniumdichlorid
Dimethylsilandiyl(2,5-dimethyl-4-thiapentalen)(2-methyl-4-(4'-ethylphenyl-indenyl) zirkoniumdichlorid
Dimethylsilandiyl(2,5-dimethyl-6-thiapentalen)(2-methyl-4-(4'-ethylphenyl-indenyl) zirkoniumdichlorid
Dimethylsilandiyl(2-methyl-4-oxapentalen)(2-methyl-4-(4'-ethylphenyl-indenyl)zirkoniumdichlorid
Dimethylsilandiyl(2-methyl-5-oxapentalen)(2-methyl-4-(4'-ethylphenyl-indenyl)zirkoniumdichlorid
Dimethylsilandiyl(2-methyl-6-oxapentalen)(2-methyl-4-(4'-ethylphenyl-indenyl)zirkoniumdichlorid
Dimethylsilandiyl(2,5-dimethyl-4-oxapentalen)(2-methyl-4-(4'-ethylphenyl-indenyl) zirkoniumdichlorid
Dimethylsilandiyl(2,5-dimethyl-6-oxapentalen)(2-methyl-4-(4'-ethylphenyl-indenyl) zirkoniumdichlorid
Dimethylsilandiyl(2-methyl-4-azapentalen)(2-methyl-4-(4'-n-propylphenyl-indenyl) zirkoniumdichlorid
Dimethylsilandiyl(2-methyl-5-azapentalen)(2-methyl-4-(4'-n-propylphenyl-indenyl) zirkoniumdichlorid
Dimethylsilandiyl(2-methyl-6-azapentalen)(2-methyl-4-(4'-n-propylphenyl-indenyl) zirkoniumdichlorid
Dimethylsilandiyl(2-methyl-N-phenyl-4-azapentalen)(2-methyl-4-(4'-n-propylphenyl-indenyl) zirkoniumdichlorid
Dimethylsilandiyl(2-methyl-N-phenyl-5-azapentalen)(2-methyl-4-(4'-n-propylphenyl-indenyl) zirkoniumdichlorid
Dimethylsilandiyl(2-methyl-N-phenyl-6-azapentalen)(2-methyl-4-(4'-n-propylphenyl-indenyl) zirkoniumdichlorid
Dimethylsilandiyl(2,5-dimethyl-4-azapentalen)(2-methyl-4-(4'-npropylphenyl-indenyl) zirkoniumdichlorid
Dimethylsilandiyl(2,5-dimethyl-6-azapentalen)(2-methyl-4-(4'-n-propylphenyl-indenyl) zirkoniumdichlorid
Dimethylsilandiyl(2,5-dimethyl-N-phenyl-4-azapentalen)(2-methyl-4-(4'-n-propylphenyl-indenyl) zirkoniumdichlorid
Dimethylsilandiyl (2,5-dimethyl-N-phenyl-6-azapentalen)(2-methyl-4-(4'-n-propylphenyl-indenyl) zirkoniumdichlorid
Dimethylsilandiyl(2-methyl-4-thiapentalen)(2-methyl-4-(4'-n-propylphenyl-indenyl)zirkoniumdichlorid
Dimethylsilandiyl(2-methyl-5-thiapentalen)(2-methyl-4- (4' -n-propylphenyl-indenyl)zirkoniumdichlorid
Dimethylsilandiyl(2-methyl-6-thiapentalen)(2-methyl-4-(4'-n-propylphenyl-indenyl)zirkoniumdichlorid
Dimethylsilandiyl(2,5-dimethyl-4-thiapentalen)(2-methyl-4-(4'-n-propylphenyl-indenyl) zirkoniumdichlorid
Dimethylsilandiyl(2,5-dimethyl-6-thiapentalen)(2-methyl-4-(4'-n-propylphenyl-indenyl) zirkoniumdichlorid
Dimethylsilandiyl(2-methyl-4-oxapentalen)(2-methyl-4-(4'-n-propylphenyl-indenyl)zirkoniumdichlorid
Dimethylsilandiyl(2-methyl-5-oxapentalen)(2-methyl-4-(4'-n-propylphenyl-indenyl)zirkoniumdichlorid
Dimethylsilandiyl (2-methyl-6-oxapentalen) (2-methyl-4-(4'-n-propylphenyl-indenyl) zirkoniumdichlorid
Dimethylsilandiyl(2,5-dimethyl-4-oxapentalen)(2-methyl-4-(4'-n-propylphenyl-indenyl) zirkoniumdichlorid
Dimethylsilandiyl(2,5-dimethyl-6-oxapentalen)(2-methyl-4-(4'-n-propylphenyl-indenyl) zirkoniumdichlorid
Dimethylsilandiyl (2-methyl-4-azapentalen) (2-methyl-4-(4'-isopropylphenyl-indenyl) zirkoniumdichlorid
Dimethylsilandiyl(2-methyl-5-azapentalen)(2-methyl-4-(4'-isopropylphenyl-indenyl) zirkoniumdichlorid
Dimethylsilandiyl(2-methyl-6-azapentalen)(2-methyl-4-(4'-isopropylphenyl-indenyl) zirkoniumdichlorid
Dimethylsilandiyl (2-methyl-N-phenyl-4-azapentalen)(2-methyl-4-(4'-isopropylphenyl-indenyl) zirkoniumdichlorid
Dimethylsilandiyl(2-methyl-N-phenyl-5-azapentalen)(2-methyl-4-(4'-isopropylphenyl-indenyl) zirkoniumdichlorid
Dimethylsilandiyl(2-methyl-N-phenyl-6-azapentalen)(2-methyl-4-(4'-isopropylphenyl-indenyl) zirkoniumdichlorid
Dimethylsilandiyl(2,5-dimethyl-4-azapentalen)(2-methyl-4-(4'-isopropylphenyl-indenyl) zirkoniumdichlorid
Dimethylsilandiyl(2,5-dimethyl-6-azapentalen)(2-methyl-4-(4'-isopropylphenyl-indenyl) zirkoniumdichlorid
Dimethylsilandiyl(2,5-dimethyl-N-phenyl-4-azapentalen)(2-methyl-4-(4'-isopropylphenyl-indenyl) zirkoniumdichlorid
Dimethylsilandiyl(2,5-dimethyl-N-phenyl-6-azapentalen)(2-methyl-4-(4'-isopropylphenyl-indenyl) zirkoniumdichlorid
Dimethylsilandiyl(2-methyl-4-thiapentalen)(2-methyl-4-(4'-isopropylphenyl-indenyl) zirkoniumdichlorid
Dimethylsilandiyl(2-methyl-5-thiapentalen)(2-methyl-4-(4'-isopropylphenyl-indenyl)zirkoniumdichlorid
Dimethylsilandiyl(2-methyl-6-thiapentalen)(2-methyl-4-(4'-isopropylphenyl-indenyl)zirkoniumdichlorid
Dimethylsilandiyl(2,5-dimethyl-4-thiapentalen)(2-methyl-4-(4'-isopropylphenyl-indenyl) zirkoniumdichlorid
Dimethylsilandiyl(2,5-dimethyl-6-thiapentalen)(2-methyl-4-(4'-isopropylphenyl-indenyl) zirkoniumdichlorid
Dimethylsilandiyl(2-methyl-4-oxapentalen)(2-methyl-4-(4'-isopropylphenyl-indenyl)zirkoniumdichlorid
Dimethylsilandiyl(2-methyl-5-oxapentalen)(2-methyl-4-(4'-isopropylphenyl-indenyl)zirkoniumdichlorid
Dimethylsilandiyl(2-methyl-6-oxapentalen)(2-methyl-4-(4'-isopropylphenyl-indenyl) zirkoniumdichlorid
Dimethylsilandiyl (2,5-dimethyl-4-oxapentalen) (2-methyl-4-(4'-isopropylphenyl-indenyl) zirkoniumdichlorid
Dimethylsilandiyl(2,5-dimethyl-6-oxapentalen)(2-methyl-4-(4'-isopropylphenyl-indenyl) zirkoniumdichlorid
Dimethylsilandiyl(2-methyl-4-azapentalen)(2-methyl-4-(4'-n-butylphenyl-indenyl) zirkoniumdichlorid
Dimethylsilandiyl(2-methyl-5-azapentalen)(2-methyl-4-(4'-n-butylphenyl-indenyl) zirkoniumdichlorid
Dimethylsilandiyl(2-methyl-6-azapentalen)(2-methyl-4-(4'-n-butylphenyl-indenyl) zirkoniumdichlorid
Dimethylsilandiyl(2-methyl-N-phenyl-4-azapentalen)(2-methyl-4-(4'-n-butylphenyl-indenyl) zirkoniumdichlorid
Dimethylsilandiyl(2-methyl-N-phenyl-5-azapentalen)(2-methyl-4-(4'-n-butylphenyl-indenyl) zirkoniumdichlorid
Dimethylsilandiyl(2-methyl-N-phenyl-6-azapentalen)(2-methyl-4-(4'-n-butylphenyl-indenyl) zirkoniumdichlorid
Dimethylsilandiyl(2,5-dimethyl-4-azapentalen)(2-methyl-4-(4'-n-butylphenyl-indenyl) zirkoniumdichlorid
Dimethylsilandiyl(2,5-dimethyl-6-azapentalen)(2-methyl-4-(4'-n-butylphenyl-indenyl) zirkoniumdichlorid
Dimethylsilandiyl(2,5-dimethyl-N-phenyl-4-azapentalen)(2-methyl-4-(4'-n-butylphenyl-indenyl) zirkoniumdichlorid
Dimethylsilandiyl(2,5-dimethyl-N-phenyl-6-azapentalen) (2-methyl-4-(4'-n-butylphenyl-indenyl)zirkoniumdichlorid
Dimethylsilandiyl(2-methyl-4-thiapentalen)(2-methyl-4-(4'-n-butylphenyl-indenyl)zirkoniumdichlorid
Dimethylsilandiyl(2-methyl-5-thiapentalen)(2-methyl-4-(4'-n-butylphenyl-indenyl)zirkoniumdichlorid
Dimethylsilandiyl(2-methyl-6-thiapentalen)(2-methyl-4-(4'-n-butylphenyl-indenyl)zirkoniumdichlorid
Dimethylsilandiyl(2,5-dimethyl-4-thiapentalen)(2-methyl-4-(4'-n-butylphenyl-indenyl) zirkoniumdichlorid
Dimethylsilandiyl(2,5-dimethyl-6-thiapentalen)(2-methyl-4-(4'-n-butylphenyl-indenyl) zirkoniumdichlorid
Dimethylsilandiyl(2-methyl-4-oxapentalen)(2-methyl-4-(4'-n-butylphenyl-indenyl)zirkoniumdichlorid
Dimethylsilandiyl(2-methyl-5-oxapentalen)(2-methyl-4-(4'-n-butylphenyl-indenyl)zirkoniumdichlorid
Dimethylsilandiyl(2-methyl-6-oxapentalen)(2-methyl-4-(4'-n-butylphenyl-indenyl)zirkoniumdichlorid
Dimethylsilandiyl(2,5-dimethyl-4-oxapentalen)(2-methyl-4-(4'-n-butylphenyl-indenyl) zirkoniumdichlorid
Dimethylsilandiyl(2,5-dimethyl-6-oxapentalen)(2-methyl-4-(4'-n-butylphenyl-indenyl) zirkoniumdichlorid
Dimethylsilandiyl(2-methyl-4-azapentalen)(2-methyl-4-(4'-s-butylphenyl-indenyl) zirkoniumdichlorid
Dimethylsilandiyl (2-methyl-5-azapentalen) (2-methyl-4-(4'-s-butylphenyl-indenyl) zirkoniumdichlorid
Dimethylsilandiyl(2-methyl-6-azapentalen) (2-methyl-4-(4'-s-butylphenyl-indenyl) zirkoniumdichlorid
Dimethylsilandiyl(2-methyl-N-phenyl-4-azapentalen)(2-methyl-4-(4'-s-butylphenyl-indenyl) zirkoniumdichlorid
Dimethylsilandiyl(2-methyl-N-phenyl-5-azapentalen)(2-methyl-4-(4'-s-butylphenyl-indenyl) zirkoniumdichlorid
Dimethylsilandiyl(2-methyl-N-phenyl-6-azapentalen)(2-methyl-4-(4'-s-butylphenyl-indenyl) zirkoniumdichlorid
Dimethylsilandiyl(2,5-dimethyl-4-azapentalen)(2-methyl-4-(4'-s-butylphenyl-indenyl) zirkoniumdichlorid
Dimethylsilandiyl(2,5-dimethyl-6-azapentalen)(2-methyl-4-(4'-s-butylphenyl-indenyl) zirkoniumdichlorid
Dimethylsilandiyl(2,5-dimethyl-N-phenyl-4-azapentalen) (2-methyl-4-(4'-s-butylphenyl-indenyl) zirkoniumdichlorid
Dimethylsilandiyl (2,5-dimethyl-N-phenyl-6-azapentalen) (2-methyl-4-(4'-s-butylphenyl-indenyl) zirkoniumdichlorid
Dimethylsilandiyl(2-methyl-4-thiapentalen)(2-methyl-4-(4'-s-butylphenyl-indenyl) zirkoniumdichlorid
Dimethylsilandiyl(2-methyl-5-thiapentalen)(2-methyl-4-(4'-s-butylphenyl-indenyl)zirkoniumdichlorid
Dimethylsilandiyl(2-methyl-6-thiapentalen)(2-methyl-4-(4'-s-butylphenyl-indenyl)zirkoniumdichlorid
Dimethylsilandiyl(2,5-dimethyl-4-thiapentalen)(2-methyl-4-(4'-s-butylphenyl-indenyl) zirkoniumdichlorid
Dimethylsilandiyl (2,5-dimethyl-6-thiapentalen) (2-methyl-4-(4'-s-butylphenyl-indenyl) zirkoniumdichlorid
Dimethylsilandiyl (2-methyl-4-oxapentalen)(2-methyl-4-(4'-s-butyl-phenyl-indenyl)zirkoniumdichlorid
Dimethylsilandiyl(2-methyl-5-oxapentalen)(2-methyl-4-(4'-s-butylphenyl-indenyl)zirkoniumdichlorid
Dimethylsilandiyl(2-methyl-6-oxapentalen)(2-methyl-4-(4'-s-butylphenyl-indenyl)zirkoniumdichlorid
Dimethylsilandiyl(2,5-dimethyl-4-oxapentalen)(2-methyl-4-(4'-s-butylphenyl-indenyl) zirkoniumdichlorid
Dimethylsilandiyl(2,5-dimethyl-6-oxapentalen)(2-methyl-4-(4'-s-butylphenyl-indenyl) zirkoniumdichlorid
Dimethylsilandiyl(2-methyl-4-azapentalen)(2-methyl-4-(4'-tert-butylphenyl-indenyl) zirkoniumdichlorid
Dimethylsilandiyl(2-methyl-5-azapentalen)(2-methyl-4-(4'-tert-butylphenyl-indenyl) zirkoniumdichlorid
Dimethylsilandiyl(2-methyl-6-azapentalen) (2-methyl-4-(4'-tert-butylphenyl-indenyl) zirkoniumdichlorid
Dimethylsilandiyl (2-methyl-N-phenyl-4-azapentalen) (2-methyl-4-(4'-tert-butylphenyl-indenyl) zirkoniumdichlorid
Dimethylsilandiyl(2-methyl-N-phenyl-5-azapentalen) (2-methyl-4-(4'-tert-butylphenyl-indenyl) zirkoniumdichlorid
Dimethylsilandiyl(2-methyl-N-phenyl-6-azapentalen) (2-methyl-4-(4'-tert-butylphenyl-indenyl) zirkoniumdichlorid
Dimethylsilandiyl(2,5-dimethyl-4-azapentalen) (2-methyl-4-(4'-tert-butylphenyl-indenyl) zirkoniumdichlorid
Dimethylsilandiyl(2,5-dimethyl-6-azapentalen) (2-methyl-4-(4'-tert-butylphenyl-indenyl) zirkoniumdichlorid
Dimethylsilandiyl (2,5-dimethyl-N-phenyl-4-azapentalen) (2-methyl-4-(4'-tert-butylphenyl-indenyl) zirkoniumdichlorid
Dimethylsilandiyl(2,5-dimethyl-N-phenyl-6-azapentalen) (2-methyl-4-(4'-tert-butylphenyl-indenyl) zirkoniumdichlorid
Dimethylsilandiyl(2-methyl-4-thiapentalen)(2-methyl-4-(4'-tert-butylphenyl-indenyl)zirkoniumdichlorid
Dimethylsilandiyl(2-methyl-5-thiapentalen)(2-methyl-4-(4'-tert-butylphenyl-indenyl) zirkoniumdichlorid
Dimethylsilandiyl(2-methyl-6-thiapentalen)(2-methyl-4-(4'-tert-butylphenyl-indenyl)zirkoniumdichlorid
Dimethylsilandiyl(2,5-dimethyl-4-thiapentalen)(2-methyl-4-(4'-tert-butylphenyl-indenyl) zirkoniumdichlorid
Dimethylsilandiyl(2,5-dimethyl-6-thiapentalen)(2-methyl-4-(4'-tert-butylphenyl-indenyl) zirkoniumdichlorid
Dimethylsilandiyl(2-methyl-4-oxapentalen)(2-methyl-4-(4'-tert-butylphenyl-indenyl)zirkoniumdichlorid
Dimethylsilandiyl(2-methyl-5-oxapentalen)(2-methyl-4-(4'-tert-butylphenyl-indenyl)zirkoniumdichlorid
Dimethylsilandiyl(2-methyl-6-oxapentalen)(2-methyl-4-(4'-tert-butylphenyl-indenyl)zirkoniumdichlorid
Dimethylsilandiyl(2,5-dimethyl-4-oxapentalen)(2-methyl-4-(4'-tert-butylphenyl-indenyl) zirkoniumdichlorid
Dimethylsilandiyl(2,5-dimethyl-6-oxapentalen)(2-methyl-4-(4'-tert-butylphenyl-indenyl) zirkoniumdichlorid
Dimethylsilandiyl(2-methyl-4-azapentalen)(2-methyl-4-(4'-n-pentylphenyl-indenyl) zirkoniumdichlorid
Dimethylsilandiyl(2-methyl-5-azapentalen)(2-methyl-4-(4'-n-pentylphenyl-indenyl) zirkoniumdichlorid
Dimethylsilandiyl(2-methyl-6-azapentalen)(2-methyl-4-(4'-n-pentylphenyl-indenyl) zirkoniumdichlorid
Dimethylsilandiyl(2-methyl-N-phenyl-4-azapentalen)(2-methyl-4-(4'-n-pentylphenyl-indenyl) zirkoniumdichlorid
Dimethylsilandiyl(2-methyl-N-phenyl-5-azapentalen)(2-methyl-4-(4'-n-pentylphenyl-indenyl) zirkoniumdichlorid
Dimethylsilandiyl(2-methyl-N-phenyl-6-azapentalen)(2-methyl-4-(4'-n-pentylphenyl-indenyl) zirkoniumdichlorid
Dimethylsilandiyl(2,5-dimethyl-4-azapentalen)(2-methyl-4-(4'-n-pentylphenyl-indenyl) zirkoniumdichlorid
Dimethylsilandiyl(2,5-dimethyl-6-azapentalen)(2-methyl-4-(4'-n-pentylphenyl-indenyl) zirkoniumdichlorid
Dimethylsilandiyl(2,5-dimethyl-N-phenyl-4-azapentalen)(2-methyl-4-(4'-n-pentylphenyl-indenyl) zirkoniumdichlorid
Dimethylsilandiyl(2,5-dimethyl-N-phenyl-6-azapentalen)(2-methyl-4-(4'-n-pentylphenyl-indenyl) zirkoniumdichlorid
Dimethylsilandiyl (2-methyl-4-thiapentalen) (2-methyl-4-(4'-n-pentylphenyl-indenyl)zirkoniumdichlorid
Dimethylsilandiyl(2-methyl-5-thiapentalen)(2-methyl-4-(4'-n-pentylphenyl-indenyl)zirkoniumdichlorid
Dimethylsilandiyl(2-methyl-6-thiapentalen)(2-methyl-4-(4'-n-pentylphenyl-indenyl)zirkoniumdichlorid
Dimethylsilandiyl(2,5-dimethyl-4-thiapentalen)(2-methyl-4-(4'-n-pentylphenyl-indenyl) zirkoniumdichlorid
Dimethylsilandiyl(2,5-dimethyl-6-thiapentalen)(2-methyl-4-(4'-n-pentylphenyl-indenyl) zirkoniumdichlorid
Dimethylsilandiyl(2-methyl-4-oxapentalen)(2-methyl-4-(4'-n-pentylphenyl-indenyl)zirkoniumdichlorid
Dimethylsilandiyl(2-methyl-5-oxapentalen)(2-methyl-4-(4'-n-pentylphenyl-indenyl)zirkoniumdichlorid
Dimethylsilandiyl(2-methyl-6-oxapentalen)(2-methyl-4-(4'-n-pentylphenyl-indenyl)zirkoniumdichlorid
Dimethylsilandiyl (2,5-dimethyl-4-oxapentalen)(2-methyl-4-(4'-n-pentylphenyl-indenyl) zirkoniumdichlorid
Dimethylsilandiyl(2,5-dimethyl-6-oxapentalen)(2-methyl-4-(4'-n-pentylphenyl-indenyl) zirkoniumdichlorid
Dimethylsilandiyl(2-methyl-4-azapentalen)(2-methyl-4-(4'-n-hexylphenyl-indenyl) zirkoniumdichlorid
Dimethylsilandiyl (2-methyl-5-azapentalen)(2-methyl-4-(4'-n-hexylphenyl-indenyl) zirkoniumdichlorid
Dimethylsilandiyl (2-methyl-6-azapentalen) (2-methyl-4-(4'-n-hexylphenyl-indenyl) zirkoniumdichlorid
Dimethylsilandiyl(2-methyl-N-phenyl-4-azapentalen)(2-methyl-4-(4'-n-hexylphenyl-indenyl) zirkoniumdichlorid
Dimethylsilandiyl(2-methyl-N-phenyl-5-azapentalen)(2-methyl-4-(4'-n-hexylphenyl-indenyl) zirkoniumdichlorid
Dimethylsilandiyl(2-methyl-N-phenyl-6-azapentalen)(2-methyl-4-(4'-n-hexylphenyl-indenyl) zirkoniumdichlorid
Dimethylsilandiyl(2,5-dimethyl-4-azapentalen)(2-methyl-4-(4'-n-hexylphenyl-indenyl) zirkoniumdichlorid
Dimethylsilandiyl(2,5-dimethyl-6-azapentalen)(2-methyl-4-(4'-n-hexylphenyl-indenyl) zirkoniumdichlorid
Dimethylsilandiyl(2,5-dimethyl-N-phenyl-4-azapentalen)(2-methyl-4-(4'-n-hexylphenyl-indenyl) zirkoniumdichlorid
Dimethylsilandiyl(2,5-dimethyl-N-phenyl-6-azapentalen)(2-methyl-4-(4'-n-hexylphenyl-indenyl) zirkoniumdichlorid
Dimethylsilandiyl(2-methyl-4-thiapentalen)(2-methyl-4-(4'-n-hexylphenyl-indenyl)zirkoniumdichlorid
Dimethylsilandiyl(2-methyl-5-thiapentalen)(2-methyl-4-(4'-n-hexylphenyl-indenyl)zirkoniumdichlorid
Dimethylsilandiyl(2-methyl-6-thiapentalen)(2-methyl-4- (4'-n-hexylphenyl-indenyl) zirkoniumdichlorid
Dimethylsilandiyl(2,5-dimethyl-4-thiapentalen)(2-methyl-4- (4'-n-hexylphenyl-indenyl) zirkoniumdichlorid
Dimethylsilandiyl(2,5-dimethyl-6-thiapentalen)(2-methyl-4-(4'-n-hexylphenyl-indenyl) zirkoniumdichlorid
Dimethylsilandiyl(2-methyl-4-oxapentalen)(2-methyl-4-(4'-n-hexylphenyl-indenyl)zirkoniumdichlorid
Dimethylsilandiyl(2-methyl-5-oxapentalen)(2-methyl-4-(4'-n-hexylphenyl-indenyl)zirkoniumdichlorid
Dimethylsilandiyl (2-methyl-6-oxapentalen) (2-methyl-4-(4'-n-hexylphenyl-indenyl)zirkoniumdichlorid
Dimethylsilandiyl(2,5-dimethyl-4-oxapentalen)(2-methyl-4-(4'-n-hexylphenyl-indenyl) zirkoniumdichlorid
Dimethylsilandiyl(2,5-dimethyl-6-oxapentalen)(2-methyl-4-(4'-n-hexylphenyl-indenyl) zirkoniumdichlorid
Dimethylsilandiyl (2-methyl-4-azapentalen) (2-methyl-4-(4'-cyclohexylphenyl-indenyl) zirkoniumdichlorid
Dimethylsilandiyl(2-methyl-5-azapentalen)(2-methyl-4-(4'-cyclohexylphenyl-indenyl) zirkoniumdichlorid
Dimethylsilandiyl(2-methyl-6-azapentalen)(2-methyl-4-(4'-cyclohexylphenyl-indenyl) zirkoniumdichlorid
Dimethylsilandiyl(2-methyl-N-phenyl-4-azapentalen)(2-methyl-4-(4'-cyclohexylphenyl-indenyl)zirkoniumdichlorid
Dimethylsilandiyl(2-methyl-N-phenyl-5-azapentalen)(2-methyl-4-(4'-cyclohexylphenyl-indenyl)zirkoniumdichlorid
Dimethylsilandiyl(2-methyl-N-phenyl-6-azapentalen)(2-methyl-4-(4'-cyclohexylphenyl-indenyl) zirkoniumdichlorid
Dimethylsilandiyl(2,5-dimethyl-4-azapentalen)(2-methyl-4-(4'-cyclohexylphenyl-indenyl) zirkoniumdichlorid
Dimethylsilandiyl(2,5-dimethyl-6-azapentalen)(2-methyl-4-(4'-cyclohexylphenyl-indenyl) zirkoniumdichlorid
Dimethylsilandiyl(2,5-dimethyl-N-phenyl-4-azapentalen)(2-methyl-4-(4'-cyclohexylphenyl-indenyl) zirkoniumdichlorid
Dimethylsilandiyl(2,5-dimethyl-N-phenyl-6-azapentalen)(2-methyl-4-(4'-cyclohexylphenyl-indenyl) zirkoniumdichlorid
Dimethylsilandiyl(2-methyl-4-thiapentalen)(2-methyl-4-(4'-cyclohexylphenyl-indenyl)zirkoniumdichlorid
Dimethylsilandiyl(2-methyl-5-thiapentalen)(2-methyl-4-(4'-cyclohexylphenyl-indenyl)zirkoniumdichlorid
Dimethylsilandiyl(2-methyl-6-thiapentalen)(2-methyl-4-(4'-cyclohexylphenyl-indenyl)zirkoniumdichlorid
Dimethylsilandiyl (2,5-dimethyl-4-thiapentalen)(2-methyl-4-(4'-cyclohexylphenyl-indenyl) zirkoniumdichlorid
Dimethylsilandiyl (2,5-dimethyl-6-thiapentalen) (2-methyl-4-(4'-cyclohexylphenyl-indenyl) zirkoniumdichlorid
Dimethylsilandiyl (2-methyl-4-oxapentalen) (2-methyl-4-(4'-cyclohexylphenyl-indenyl)zirkoniumdichlorid
Dimethylsilandiyl(2-methyl-5-oxapentalen)(2-methyl-4- (4' -cyclohexylphenyl-indenyl) zirkoniumdichlorid
Dimethylsilandiyl (2-methyl-6-oxapentalen) (2-methyl-4- (4' -cyclohexylphenyl-indenyl)zirkoniumdichlorid
Dimethylsilandiyl(2,5-dimethyl-4-oxapentalen)(2-methyl-4-(4'-cyclohexylphenyl-indenyl) zirkoniumdichlorid
Dimethylsilandiyl(2,5-dimethyl-6-oxapentalen)(2-methyl-4-(4'-cyclohexylphenyl-indenyl) zirkoniumdichlorid
Dimethylsilandiyl (2-methyl-4-azapentalen) (2-methyl-4-(4'-trimethylsilylphenyl-indenyl) zirkoniumdichlorid
Dimethylsilandiyl(2-methyl-5-azapentalen) (2-methyl-4- (4' -trimethylsilylphenyl-indenyl) zirkoniumdichlorid
Dimethylsilandiyl(2-methyl-6-azapentalen)(2-methyl-4-(4'-trimethylsilylphenyl-indenyl) zirkoniumdichlorid
Dimethylsilandiyl(2-methyl-N-phenyl-4-azapentalen)(2-methyl-4-(4'-trimethylsilylphenyl-indenyl) zirkoniumdichlorid
Dimethylsilandiyl(2-methyl-N-phenyl-5-azapentalen)(2-methyl-4-(4'-trimethylsilylphenyl-indenyl) zirkoniumdichlorid
Dimethylsilandiyl(2-methyl-N-phenyl-6-azapentalen)(2-methyl-4-(4'-trimethylsilylphenyl-indenyl) zirkoniumdichlorid
Dimethylsilandiyl(2,5-dimethyl-4-azapentalen)(2-methyl-4-(4'-trimethylsilylphenyl-indenyl) zirkoniumdichlorid
Dimethylsilandiyl(2,5-dimethyl-6-azapentalen)(2-methyl-4-(4'-trimethylsilylphenyl-indenyl) zirkoniumdichlorid
Dimethylsilandiyl(2,5-dimethyl-N-phenyl-4-azapentalen)(2-methyl-4-(4'-trimethylsilylphenyl-indenyl) zirkoniumdichlorid
Dimethylsilandiyl(2,5-dimethyl-N-phenyl-6-azapentalen)(2-methyl-4-(4'-trimethylsilylphenyl-indenyl) zirkoniumdichlorid
Dimethylsilandiyl (2-methyl-4-thiapentalen) (2-methyl-4-(4'-trimethylsilylphenyl-indenyl)zirkoniumdichlorid
Dimethylsilandiyl(2-methyl-5-thiapentalen)(2-methyl-4-(4'-trimethylsilylphenyl-indenyl) zirkoniumdichlorid
Dimethylsilandiyl(2-methyl-6-thiapentalen)(2-methyl-4-(4'-trimethylsilylphenyl-indenyl)zirkoniumdichlorid
Dimethylsilandiyl(2,5-dimethyl-4-thiapentalen) (2-methyl-4-(4'-trimethylsilylphenyl-indenyl) zirkoniumdichlorid
Dimethylsilandiyl(2, 5-dimethyl-6-thiapentalen)(2-methyl-4-(4'-trimethylsilylphenyl-indenyl)zirkoniumdichlorid
Dimethylsilandiyl(2-methyl-4-oxapentalen)(2-methyl-4-(4'-trimethylsilylphenyl-indenyl)zirkoniumdichlorid
Dimethylsilandiyl(2-methyl-5-oxapentalen)(2-methyl-4-(4'-trimethylsilylphenyl-indenyl)zirkoniumdichlorid
Dimethylsilandiyl(2-methyl-6-oxapentalen)(2-methyl-4-(4'-trimethylsilylphenyl-indenyl)zirkoniumdichlorid
Dimethylsilandiyl (2, 5-dimethyl-4-oxapentalen)(2-methyl-4-(4'-trimethylsilylphenyl-indenyl) zirkoniumdichlorid
Dimethylsilandiyl (2, 5-dimethyl-6-oxapentalen)(2-methyl-4- (4'-trimethylsilylphenyl-indenyl) zirkoniumdichlorid
Dimethylsilandiyl(2-methyl-4-azapentalen)(2-methyl-4-(4'-adamantylphenyl-indenyl) zirkoniumdichlorid
Dimethylsilandiyl(2-methyl-5-azapentalen)(2-methyl-4-(4'-adamantylphenyl-indenyl) zirkoniumdichlorid
Dimethylsilandiyl(2-methyl-6-azapentalen)(2-methyl-4-(4'-adamantylphenyl-indenyl) zirkoniumdichlorid
Dimethylsilandiyl(2-methyl-N-phenyl-4-azapentalen)(2-methyl-4-(4'-adamantylphenyl-indenyl) zirkoniumdichlorid
Dimethylsilandiyl (2-methyl-N-phenyl-5-azapentalen)(2-methyl-4-(4'-adamantylphenyl-indenyl) zirkoniumdichlorid
Dimethylsilandiyl(2-methyl-N-phenyl-6-azapentalen)(2-methyl-4-(4'-adamantylphenyl-indenyl) zirkoniumdichlorid
Dimethylsilandiyl(2,5-dimethyl-4-azapentalen)(2-methyl-4- (4'-adamantylphenyl-indenyl) zirkoniumdichlorid
Dimethylsilandiyl (2,5-dimethyl-6-azapentalen)(2-methyl-4-(4'-adamantylphenyl-indenyl) zirkoniumdichlorid
Dimethylsilandiyl(2,5-dimethyl-4-azapentalen)(2-methyl-4- (4'-adamantylphenyl-indenyl) zirkoniumdichlorid
Dimethylsilandiyl(2,5-dimethyl-N-phenyl-4-azapentalen)(2-methyl-4-(4'-adamantylphenyl-indenyl) zirkoniumdichlorid
Dimethylsilandiyl(2,5-dimethyl-N-phenyl-6-azapentalen)(2-methyl-4-(4'-adamantylphenyl-indenyl) zirkoniumdichlorid
Dimethylsilandiyl(2-methyl-4-thiapentalen)(2-methyl-4-(4'-adamantylphenyl-indenyl)zirkoniumdichlorid
Dimethylsilandiyl(2-methyl-5-thiapentalen)(2-methyl-4-(4'-adamantylphenyl-indenyl)zirkoniumdichlorid
Dimethylsilandiyl(2-methyl-6-thiapentalen)(2-methyl-4-(4'-adamantylphenyl-indenyl)zirkoniumdichlorid
Dimethylsilandiyl (2,5-dimethyl-4-thiapentalen) (2-methyl-4-(4'-adamantylphenyl-indenyl)zirkoniumdichlorid
Dimethylsilandiyl(2,5-dimethyl-6-thiapentalen) (2-methyl-4-(4'-adamantylphenyl-indenyl) zirkoniumdichlorid
Dimethylsilandiyl(2-methyl-4-oxapentalen)(2-methyl-4-(4'-adamantylphenyl-indenyl)zirkoniumdichlorid
Dimethylsilandiyl(2-methyl-5-oxapentalen)(2-methyl-4-(4'-adamantylphenyl-indenyl) zirkoniumdichlorid
Dimethylsilandiyl(2-methyl-6-oxapentalen)(2-methyl-4-(4'-adamantylphenyl-indenyl)zirkoniumdichlorid
Dimethylsilandiyl(2,5-dimethyl-4-oxapentalen)(2-methyl-4-(4'-adamantylphenyl-indenyl) zirkoniumdichlorid
Dimethylsilandiyl(2,5-dimethyl-6-oxapentalen)(2-methyl-4-(4'-adamantylphenyl-indenyl) zirkoniumdichlorid
Dimethylsilandiyl (2-methyl-4-azapentalen) (2-methyl-4-(4'-tris(trifluormethyl)methylphenyl-indenyl) zirkoniumdichlorid
Dimethylsilandiyl(2-methyl-5-azapentalen)(2-methyl-4-(4'-tris(trifluormethyl)methylphenyl-indenyl) zirkoniumdichlorid
Dimethylsilandiyl(2-methyl-6-azapentalen)(2-methyl-4-(4'-tris(trifluormethyl)methylphenyl-indenyl) zirkoniumdichlorid
Dimethylsilandiyl(2-methyl-N-phenyl-4-azapentalen)(2-methyl-4-(4'-tris(trifluormethyl)methylphenyl-indenyl) zirkonium-dichlorid
Dimethylsilandiyl(2-methyl-N-phenyl-5-azapentalen)(2-methyl-4-(4'-tris(trifluormethyl)methylphenyl-indenyl) zirkoniumdichlorid
Dimethylsilandiyl (2-methyl-N-phenyl-6-azapentalen) (2-methyl-4-(4'-tris(trifluormethyl)methylphenyl-indenyl) zirkoniumdichlorid
Dimethylsilandiyl(2,5-dimethyl-4-azapentalen)(2-methyl-4-(4'-tris(trifluormethyl)methylphenyl-indenyl) zirkoniumdichlorid
Dimethylsilandiyl(2,5-dimethyl-6-azapentalen)(2-methyl-4-(4'-tris(trifluormethyl)methylphenyl-indenyl) zirkoniumdichlorid
Dimethylsilandiyl(2,5-dimethyl-N-phenyl-4-azapentalen) (2-methyl-4-(4'-tris(trifluormethyl)methylphenyl-indenyl) zirkoniumdichlorid
Dimethylsilandiyl(2,5-dimethyl-N-phenyl-6-azapentalen) (2-methyl-4-(4'-tris(trifluormethyl)methylphenyl-indenyl) zirkoniumdichlorid
Dimethylsilandiyl (2-methyl-4-thiapentalen) (2-methyl-4-(4'-tris(trifluormethyl)methylphenyl-indenyl)zirkoniumdichlorid
Dimethylsilandiyl(2-methyl-5-thiapentalen)(2-methyl-4-(4'-tris(trifluormethyl)methylphenyl-indenyl) zirkoniumdichlorid
Dimethylsilandiyl (2-methyl-6-thiapentalen) (2-methyl-4-(4'-tris(trifluormethyl)methylphenyl-indenyl)zirkoniumdichlorid
Dimethylsilandiyl(2,5-dimethyl-4-thiapentalen)(2-methyl-4-(4'-tris(trifluormethyl)methylphenyl-indenyl)zirkoniumdichlorid
Dimethylsilandiyl(2, 5-dimethyl-6-thiapentalen)(2-methyl-4-(4'-tris(trifluormethyl)methylphenyl-indenyl)zirkoniumdichlorid
Dimethylsilandiyl(2-methyl-4-oxapentalen)(2-methyl-4-(4'-tris(trifluormethyl) methylphenyl-indenyl) zirkoniumdichlorid
Dimethylsilandiyl(2-methyl-5-oxapentalen)(2-methyl-4-(4'-tris(trifluormethyl)methylphenyl-indenyl)zirkoniumdichlorid
Dimethylsilandiyl(2-methyl-6-oxapentalen)(2-methyl-4-(4'-tris(trifluormethyl)methylphenyl-indenyl)zirkoniumdichlorid
Dimethylsilandiyl(2,5-dimethyl-4-oxapentalen)(2-methyl-4-(4'-tris(trifluormethyl)methylphenyl-indenyl)zirkoniumdichlorid
Dimethylsilandiyl(2,5-dimethyl-6-oxapentalen)(2-methyl-4-(4'-tris(trifluormethyl)methylphenyl-indenyl)zirkoniumdichlorid
Dimethylsilandiyl(2-methyl-4-azapentalen)(2-ethyl-4-(4'-tert-butylphenyl-indenyl) zirkoniumdichlorid
Dimethylsilandiyl(2-methyl-5,6-di-hydro-4-azapentalen)(2-ethyl-4-(4'-tert-butylphenyl-indenyl) zirkoniumdichlorid
Dimethylsilandiyl(2-methyl-4-azapentalen)(2-ethyl-4-(4'-tert-butylphenyl-tetrahydroindenyl) zirkoniumdichlorid
Dimethylsilandiyl(2-methyl-5-azapentalen)(2-n-butyl-4-(4'-tert-butylphenyl-indenyl) zirkoniumdichlorid
Ethyliden(2-methyl-6-azapentalen)(2-methyl-4-(4'-tert-butylphenyl-indenyl) zirkoniumdichlorid
Dimethylsilandiyl(2-methyl-N-trimethylsilyl-4-azapentalen)(2-methyl-4-(4'-tert-butylphenyl-indenyl) zirkoniumdichlorid
Dimethylsilandiyl(2-methyl-N-tolyl-5-azapentalen)(2-n-propyl-4-(4'-tert-butylphenyl-indenyl) zirkoniumdichlorid
Dimethylgermyldiyl(2-methyl-N-phenyl-6-azapentalen)(2-methyl-4-(4'-tert-butylphenyl-indenyl) zirkoniumdichlorid
Methylethyliden(2,5-dimethyl-4-azapentalen)(2-methyl-4-(4'-tert-butylphenyl-indenyl) zirkoniumdichlorid
Dimethylsilandiyl(2,5-di-iso-propyl-6-azapentalen)(2-methyl-4-(4'-tert-butylphenyl-indenyl) zirkoniumdichlorid
Dimethylsilandiyl(2,5-dimethyl-N-phenyl-4-azapentalen)(2,6-dimethyl-4-(4'-tert-butylphenyl-indenyl) zirkoniumdichlorid
Dimethylsilandiyl(2,5-dimethyl-N-phenyl-6-azapentalen) (2-methyl-4-(6'-tert-butylnaphthyl-indenyl) zirkoniumdichlorid
Dimethylsilandiyl (2,5-dimethyl-N-phenyl-6-azapentalen) (2-methyl-4-(6'-tert-butylanthracenyl-indenyl) zirkoniumdichlorid
Dimethylsilandiyl(2-methyl-4-phosphapentalen)(2-methyl-4-(4'-tert-butylphenyl-indenyl)zirkoniumdichlorid
Diphenylsilandiyl(2-methyl-5-thiapentalen)(2-methyl-4-(4'-tert-butylphenyl-indenyl)zirkoniumdichlorid
Methylphenylsilandiyl(2-methyl-6-thiapentalen)(2-methyl-4-(4'-tert-butylphenyl-indenyl)zirkoniumdichlorid
Methyliden(2,5-dimethyl-4-thiapentalen)(2-methyl-4-(4'-tert-butylphenyl-indenyl) zirkoniumdichlorid
Dimethylmethyliden(2,5-dimethyl-6-thiapentalen)(2-methyl-4-(4'-tert-butylphenyl-indenyl) zirkoniumdichlorid
Diphenylsilandiyl(2,5-dimethyl-4-oxapentalen)(2-methyl-4-(4'-tert-butylphenyl-indenyl) zirkoniumdichlorid
Diphenylsilandiyl(2,5-dimethyl-6-oxapentalen)(2-methyl-4-(4'-tert-butylphenyl-indenyl) zirkoniumdichlorid
Dimethylsilandiyl(2-methyl-4-azapentalen)(2-methylindenyl) zirkoniumdichlorid
Dimethylsilandiyl(2-methyl-5-azapentalen)(2-methylindenyl) zirkoniumdichlorid
Dimethylsilandiyl(2-methyl-6-azapentalen)(2-methylindenyl) zirkoniumdichlorid
Dimethylsilandiyl(2-methyl-N-phenyl-4-azapentalen)(2-methylindenyl) zirkoniumdichlorid
Dimethylsilandiyl(2-methyl-N-phenyl-5-azapentalen)(2-methylindenyl) zirkoniumdichlorid
Dimethylsilandiyl(2-methyl-N-phenyl-6-azapentalen)(2-methylindenyl) zirkoniumdichlorid
Dimethylsilandiyl (2, 5-dimethyl-4-azapentalen) (2-methylindenyl) zirkoniumdichlorid
Dimethylsilandiyl(2,5-dimethyl-6-azapentalen)(2-methylindenyl) zirkoniumdichlorid
Dimethylsilandiyl(2,5-dimethyl-N-phenyl-4-azapentalen)(2-methylindenyl) zirkoniumdichlorid
Dimethylsilandiyl(2,5-dimethyl-N-phenyl-6-azapentalen)(2-methylindenyl) zirkoniumdichlorid
Dimethylsilandiyl(2-methyl-4-thiapentalen)(2-methylindenyl)zirkoniumdichlorid
Dimethylsilandiyl(2-methyl-5-thiapentalen)(2-methylindenyl)zirkoniumdichlorid
Dimethylsilandiyl (2-methyl-6-thiapentalen) (2-methylindenyl)zirkoniumdichlorid
Dimethylsilandiyl(2,5-dimethyl-4-thiapentalen)(2-methylindenyl) zirkoniumdichlorid
Dimethylsilandiyl(2,5-dimethyl-6-thiapentalen)(2-methylindenyl) zirkoniumdichlorid
Dimethylsilandiyl(2-methyl-4-oxapentalen)(2-methylindenyl)zirkoniumdichlorid
Dimethylsilandiyl(2-methyl-5-oxapentalen)(2-methylindenyl)zirkoniumdichlorid
Dimethylsilandiyl(2-methyl-6-oxapentalen)(2-methylindenyl)zirkoniumdichlorid
Dimethylsilandiyl(2,5-dimethyl-4-oxapentalen)(2-methylindenyl) zirkoniumdichlorid
Dimethylsilandiyl(2,5-dimethyl-6-oxapentalen)(2-methylindenyl) zirkoniumdichlorid
Dimethylsilandiyl (2-methyl-4-azapentalen) (indenyl) zirkoniumdichlorid
Dimethylsilandiyl(2-methyl-5-azapentalen) (indenyl) zirkoniumdichlorid
Dimethylsilandiyl(2-methyl-6-azapentalen)(indenyl) zirkoniumdichlorid
Dimethylsilandiyl(2-methyl-N-phenyl-4-azapentalen)(indenyl) zirkoniumdichlorid
Dimethylsilandiyl(2-methyl-N-phenyl-5-azapentalen)(indenyl) zirkoniumdichlorid
Dimethylsilandiyl(2-methyl-N-phenyl-6-azapentalen)(indenyl) zirkoniumdichlorid
Dimethylsilandiyl(2,5-dimethyl-4-azapentalen)(indenyl) zirkoniumdichlorid
Dimethylsilandiyl (2,5-dimethyl-6-azapentalen) (indenyl) zirkoniumdichlorid
Dimethylsilandiyl(2,5-dimethyl-N-phenyl-4-azapentalen)(indenyl) zirkoniumdichlorid
Dimethylsilandiyl(2,5-dimethyl-N-phenyl-6-azapentalen)(indenyl) zirkoniumdichlorid
Dimethylsilandiyl(2-methyl-4-thiapentalen)(indenyl)zirkoniumdichlorid
Dimethylsilandiyl(2-methyl-5-thiapentalen)(indenyl)zirkoniumdichlorid
Dimethylsilandiyl(2-methyl-6-thiapentalen)(indenyl)zirkoniumdichlorid
Dimethylsilandiyl(2,5-dimethyl-4-thiapentalen)(indenyl) zirkoniumdichlorid
Dimethylsilandiyl(2,5-dimethyl-6-thiapentalen)(indenyl) zirkoniumdichlorid
Dimethylsilandiyl(2-methyl-4-oxapentalen)(indenyl)zirkoniumdichlorid
Dimethylsilandiyl(2-methyl-5-oxapentalen)(indenyl)zirkoniumdichlorid
Dimethylsilandiyl(2-methyl-6-oxapentalen)(indenyl)zirkoniumdichlorid
Dimethylsilandiyl(2,5-dimethyl-4-oxapentalen)(indenyl) zirkoniumdichlorid
Dimethylsilandiyl(2,5-dimethyl-6-oxapentalen)(indenyl) zirkoniumdichlorid
Dimethylsilandiyl(2-methyl-4-azapentalen)(2-methyl-4-phenyl-indenyl) zirkoniumdichlorid
Dimethylsilandiyl(2-methyl-5-azapentalen)(2-methyl-4-phenyl-indenyl) zirkoniumdichlorid
Dimethylsilandiyl(2-methyl-6-azapentalen)(2-methyl-4-phenyl-indenyl) zirkoniumdichlorid
Dimethylsilandiyl(2-methyl-N-phenyl-4-azapentalen)(2-methyl-4-phenyl-indenyl) zirkoniumdichlorid
Dimethylsilandiyl(2-methyl-N-phenyl-5-azapentalen)(2-methyl-4-phenyl-indenyl) zirkoniumdichlorid
Dimethylsilandiyl(2-methyl-N-phenyl-6-azapentalen)(2-methyl-4-phenyl-indenyl) zirkoniumdichlorid
Dimethylsilandiyl(2,5-dimethyl-4-azapentalen)(2-methyl-4-phenylindenyl) zirkoniumdichlorid
Dimethylsilandiyl(2,5-dimethyl-6-azapentalen)(2-methyl-4-phenylindenyl) zirkoniumdichlorid
Dimethylsilandiyl(2,5-dimethyl-N-phenyl-4-azapentalen)(2-methyl-4-phenyl-indenyl) zirkoniumdichlorid
Dimethylsilandiyl(2,5-dimethyl-N-phenyl-6-azapentalen)(2-methyl-4-phenyl-indenyl) zirkoniumdichlorid
Dimethylsilandiyl(2-methyl-4-thiapentalen)(2-methyl-4-phenylindenyl)zirkoniumdichlorid
Dimethylsilandiyl(2-methyl-5-thiapentalen)(2-methyl-4-phenylindenyl)zirkoniumdichlorid
Dimethylsilandiyl(2-methyl-6-thiapentalen)(2-methyl-4-phenylindenyl)zirkoniumdichlorid
Dimethylsilandiyl(2,5-dimethyl-4-thiapentalen)(2-methyl-4-phenylindenyl) zirkoniumdichlorid
Dimethylsilandiyl(2,5-dimethyl-6-thiapentalen)(2-methyl-4-phenylindenyl) zirkoniumdichlorid
Dimethylsilandiyl(2-methyl-4-oxapentalen)(2-methyl-4-phenylindenyl)zirkoniumdichlorid
Dimethylsilandiyl(2-methyl-5-oxapentalen)(2-methyl-4-phenylindenyl)zirkoniumdichlorid
Dimethylsilandiyl(2-methyl-6-oxapentalen)(2-methyl-4-phenylindenyl)zirkoniumdichlorid
Dimethylsilandiyl(2,5-dimethyl-4-oxapentalen)(2-methyl-4-phenylindenyl) zirkoniumdichlorid
Dimethylsilandiyl(2,5-dimethyl-6-oxapentalen)(2-methyl-4-phenylindenyl) zirkoniumdichlorid
Dimethylsilandiyl(2-methyl-4-azapentalen)(2-methyl-4,5-benzoindenyl) zirkoniumdichlorid
Dimethylsilandiyl(2-methyl-5-azapentalen)(2-methyl-4,5-benzoindenyl) zirkoniumdichlorid
Dimethylsilandiyl(2-methyl-6-azapentalen)(2-methyl-4,5-benzoindenyl) zirkoniumdichlorid
Dimethylsilandiyl(2-methyl-N-phenyl-4-azapentalen)(2-methyl-4,5-benzo-indenyl) zirkoniumdichlorid
Dimethylsilandiyl(2-methyl-N-phenyl-5-azapentalen)(2-methyl-4,5-benzo-indenyl) zirkoniumdichlorid
Dimethylsilandiyl(2-methyl-N-phenyl-6-azapentalen)(2-methyl-4,5-benzo-indenyl) zirkoniumdichlorid
Dimethylsilandiyl(2,5-dimethyl-4-azapentalen)(2-methyl-4,5-benzoindenyl) zirkoniumdichlorid
Dimethylsilandiyl(2,5-dimethyl-6-azapentalen)(2-methyl-4,5-benzoindenyl) zirkoniumdichlorid
Dimethylsilandiyl(2,5-dimethyl-N-phenyl-4-azapentalen)(2-methyl-4,5-benzo-indenyl) zirkoniumdichlorid
Dimethylsilandiyl(2,5-dimethyl-N-phenyl-6-azapentalen)(2-methyl-4,5-benzo-indenyl) zirkoniumdichlorid
Dimethylsilandiyl(2-methyl-4-thiapentalen)(2-methyl-4,5-benzoindenyl)zirkoniumdichlorid
Dimethylsilandiyl(2-methyl-5-thiapentalen)(2-methyl-4,5-benzoindenyl)zirkoniumdichlorid
Dimethylsilandiyl(2-methyl-6-thiapentalen)(2-methyl-4,5-benzoindenyl)zirkoniumdichlorid
Dimethylsilandiyl(2,5-dimethyl-4-thiapentalen)(2-methyl-4,5-benzo-indenyl) zirkoniumdichlorid
Dimethylsilandiyl(2,5-dimethyl-6-thiapentalen)(2-methyl-4,5-benzo-indenyl) zirkoniumdichlorid
Dimethylsilandiyl(2-methyl-4-oxapentalen)(2-methyl-4,5-benzoindenyl)zirkoniumdichlorid
Dimethylsilandiyl (2-methyl-5-oxapentalen) (2-methyl-4,5-benzoindenyl)zirkoniumdichlorid
Dimethylsilandiyl(2-methyl-6-oxapentalen)(2-methyl-4,5-benzoindenyl)zirkoniumdichlorid
Dimethylsilandiyl(2,5-dimethyl-4-oxapentalen)(2-methyl-4,5-benzoindenyl) zirkoniumdichlorid
Dimethylsilandiyl(2,5-dimethyl-6-oxapentalen)(2-methyl-4,5-benzoindenyl) zirkoniumdichlorid
Dimethylsilandiylbis(2-methyl-4-azapentalen)zirkoniumdichlorid
Dimethylsilandiylbis(2-methyl-5-azapentalen) zirkoniumdichlorid
Dimethylsilandiylbis(2-methyl-6-azapentalen) zirkoniumdichlorid
Dimethylsilandiylbis(2-methyl-N-phenyl-4-azapentalen) zirkoniumdichlorid
Dimethylsilandiylbis(2-methyl-N-phenyl-5-azapentalen) zirkoniumdichlorid
Dimethylsilandiylbis(2-methyl-N-phenyl-6-azapentalen) zirkoniumdichlorid
Dimethylsilandiylbis(2,5-dimethyl-4-azapentalen) zirkoniumdichlorid
Dimethylsilandiylbis(2,5-dimethyl-6-azapentalen) zirkoniumdichlorid
Dimethylsilandiylbis(2,5-dimethyl-N-phenyl-4-azapentalen) zirkoniumdichlorid
Dimethylsilandiylbis(2,5-dimethyl-N-phenyl-6-azapentalen) zirkoniumdichlorid
Dimethylsilandiylbis(2-methyl-4-thiapentalen)zirkoniumdichlorid
Dimethylsilandiylbis(2-methyl-5-thiapentalen)zirkoniumdichlorid
Dimethylsilandiylbis(2-methyl-6-thiapentalen)zirkoniumdichlorid
Dimethylsilandiylbis(2,5-dimethyl-4-thiapentalen) zirkoniumdichlorid
Dimethylsilandiylbis(2,5-dimethyl-6-thiapentalen) zirkoniumdichlorid
Dimethylsilandiylbis (2-methyl-4-oxapentalen) zirkoniumdichlorid
Dimethylsilandiylbis (2-methyl-5-oxapentalen) zirkoniumdichlorid
Dimethylsilandiylbis(2-methyl-6-oxapentalen)zirkoniumdichlorid
Dimethylsilandiylbis(2,5-dimethyl-4-oxapentalen)zirkoniumdichlorid
Dimethylsilandiylbis(2,5-dimethyl-6-oxapentalen)zirkoniumdichlorid

Des weiteren sind die Metallocene, bei denen das zirkoniumfragment "-zirkonium-dichlorid" die Bedeutungen
Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochloro-mono-(2-naphtholat)
Zirkonium-monochloro-mono-(2-phenylphenolat)
Zirkonium-monochloro-mono-(tert. butoxid)
Zirkonium-monochloro-mono-(N-methylanilid)
Zirkonium-monochloro-mono-(2-tert.-butylanilid)
Zirkonium-monochloro-mono-(tert.-butylamid)
Zirkonium-monochloro-mono-(di-iso.-propylamid)
Zirkonium-monochloro-mono-methyl
Zirkonium-monochloro-mono-benzyl
Zirkonium-monochloro-mono-neopentyl, hat, Beispiele für erfindungsgemäß einsetzbare Metallocene.

Weiterhin bevorzugt sind die entsprechenden Zirkoniumdimethyl-Verbindungen sowie die entsprechenden Zirkonium-η⁴-Butadien-Verbindungen.

Die erfindungsgemäßen Katalysatorsysteme enthalten vorzugsweise mindestens eine Alkylverbindung eines Elementes der Hauptgruppe III. oder IV. des Periodensystems der Elemente, welche vorzugsweise der Formel (III) entspricht, meist eine Organometallverbindung, die in jedem beliebigen stöchiometrischen Verhältnis mit Verbindungen der Formel (I) oder (II) umgesetzt werden kann.

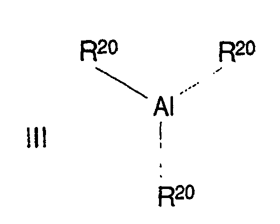

Die Reste R²⁰ in Formel (III) können gleich oder verschieden sein und ein Halogenatom, ein Wasserstoffatom, eine C₁-C₄₀-kohlenstoffhaltige Gruppe, bevorzugt C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl, bedeuten. Bevorzugt bedeutet R²⁰ C₁-C₆-Alkyl-Gruppen, besonders bevorzugt C₁-C₄-Alkyl-Gruppen.

Die Herstellung der erfindungsgemäßen Katalysatorsysteme wird für Bor als Stellvertreter für die Verbindungen der III. Gruppe des Periodensystems der Elemente beschrieben. Bei der Herstellung des erfindungsgemäßen Katalysatorsystems wird ein Mol-Verhältnis Bor : M² zwischen den Verbindungen der Formel (I) und der Formel (II) von 0,01 bis 10000 eingesetzt. Bevorzugt wird ein Mol-Verhältnis von 0.1 bis 1000, ganz besonders bevorzugt wird ein Mol-Verhältnis von 1 bis 100 eingesetzt. Hierzu kann eine Verbindung der Formel (III) in einem Mol-Verhältnis Al : M² von 0.01 bis 10000 zusätzlich zugegeben werden. Bevorzugt wird ein Mol-Verhältnis von 0.1 bis 1000, ganz besonders bevorzugt ein Mol-Verhältnis von 1 bis 100 eingesetzt.

Die Verbindungen können auf verschiedenste Weise miteinander in Kontakt gebracht werden. Bei einer möglichen Verfahrensweise wird eine Organoübergangsmetallverbindung der Formel (II) in einem aliphatischen oder aromatischen Lösungsmittel wie Toluol, Heptan, Tetrahydrofuran, Methyl-tert-butylether, Dimethoxyethan, Diisopropylether, Di-n-butylether oder Diethylether gelöst bzw. suspendiert.

Danach wird vorzugsweise eine Verbindung der Formel (III) in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt im allgemeinen zwischen -10°C und + 200°C, wobei eine Temperatur zwischen 0°C und 50°C bevorzugt ist. Im Anschluß daran wird eine Verbindung der Formel (I), insbesondere eine Organoborverbindung der Formel (I), entweder in Substanz oder in gelöster bzw. in suspendierter Form zugegeben. Die Reaktionszeit beträgt im allgemeinen zwischen 1 Minute und 24 Stunden, wobei eine Reaktionszeit zwischen 5 Minuten und 120 Minuten bevorzugt ist. Die Reaktionstemperatur liegt zwischen -10°C und +200°C, wobei eine Temperatur zwischen 0°C und 50°C bevorzugt wird. Die einzelnen Komponenten können auch nacheinander in einer beliebigen Reihenfolge in den Polymerisationskessel gegeben werden.

Wahlweise kann das erfindungsgemäße Katalysatorsystem auch geträgert eingesetzt werden. Dazu kann das erfindungsgemäße Katalysatorsystem mit einer Trägerkomponente umgesetzt werden: Das erfindunggemäße Katalysatorsystems enthält vorzugsweise mindestens eine Trägerkomponente (C), die ein beliebiger organischer oder anorganischer, inerter Feststoff sein kann. Insbesondere kann die Trägerkomponente (C) ein poröser Träger wie Talk, anorganische Oxide und feinteilige Polymerpulver (z.B. Polyolefine) sein.

Geeignete anorganische Oxide finden sich in den Gruppen 2, 3, 4, 5, 13, 14, 15 und 16 des Periodensystems der Elemente. Beispiele für als Träger bevorzugte Oxide umfassen Siliziumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxidischen Trägern eingesetzt werden können, sind z.B. MgO, ZrO₂, TiO₂ oder B₂O₃.

Die verwendeten Trägermaterialien weisen vorzugsweise eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial einen geringen Feuchtigkeitsgehalt oder Restlösemittelgehalt aufweist, kann eine Dehydratisierung oder Trocknung vor der Verwendung unterbleiben. Ist dies nicht der Fall, wie im Falle von von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000°C, vorzugsweise zwischen 200 und 800°C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führt. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösungsmittel mit dem Inertisierungsreagenz in reiner Form oder gelöst in einem geeigneten Lösungsmittel zur Reaktion bringt. Geeignete Lösungsmittel sind z.B. aliphatische oder aromatische Kohlenwasserstoffe wie Pentan, Hexan, Heptan, Toluol oder Xylol. Die Inertisierung erfolgt im allgemeinen bei Temperaturen zwischen 25°C und 120°C, bevorzugt zwischen 50°C und 70°C. Die Dauer der Reaktion beträgt üblicherweise zwischen 30 Minuten und 20 Stunden, bevorzugt 1 bis 5 Stunden. Nach dem vollständigen Ablauf der chemischen Dehydratisierung kann das Trägermaterial durch Filtration unter Inertbedingungen isoliert, ein- oder mehrmals mit geeigneten inerten Lösungsmitteln, wie den bereits zuvor beschriebenen, gewaschen und anschließend im Inertgasstrom oder im Vakuum getrocknet werden.

Erfindungsgemäß geeignet sind ebenfalls organische Trägermaterialien wie feinteilige Polyolefinpulver (z.B. Polyethylen, Polypropylen oder Polystyrol). Diese sollten vorzugsweise ebenfalls vor dem Einsatz von anhaftender Feuchtigkeit, Lösungsmittelresten oder anderen Verunreinigungen durch entsprechende Reinigungs- und Trocknungsoperationen befreit werden.

Zur Trägerung des erfindungsgemäßen Katalysatorsystems wird im allgemeinen die oben hergestellte Katalysatormischung mit einem dehydratisierten oder inertisierten Trägermaterial vermischt, das Lösungsmittel entfernt und das resultierende geträgerte Metallocen-Katalysatorsystem getrocknet, um sicherzustellen, daß das Lösungsmittel vollständig oder zum größten Teil aus den Poren des Trägermaterials entfernt wird. Der geträgerte Katalysator wird als frei fließendes Pulver erhalten.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können .

Beispiele für solche Olefine sind 1-Olefine mit 2 - 40, vorzugsweise 2 bis 10 Kohlenstoffatomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird im allgemeinen bei einer Temperatur von -60°C bis 300°C , bevorzugt 50°C bis 200°C, ganz besonders bevorzugt 50°C - 80°C durchgeführt. Der Druck beträgt im allgemeinen 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Das geträgerte Katalysatorsystem kann direkt zur Polymerisation eingesetzt werden. Es kann aber auch nach Entfernen des Lösungsmittels erneut suspendiert zur Polymerisation eingesetzt werden. Der Vorteil dieser Aktivierungsmethode liegt darin, daß es die Möglichkeit bietet, das polymerisationsaktive Katalysatorsystem erst im Reaktor entstehen zu lassen. Dadurch wird verhindert, daß beim Einschleusen des luftempfindlichen Katalysators zum Teil Zersetzung eintritt.

Weiterhin kann beim erfindungsgemäßen Verfahren ein Additiv wie ein Antistatikum verwendet werden, z.B. zur Verbesserung der Kornmorphologie des Polymers.

Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschrieben sind. Weitere geeignete Antistatika sind z.B. C₁₂- bis C₂₂- Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A-0 107 127 angegeben.

Außerdem kann als Antistatikum eine Mischung aus einem Metallsalz der Medialansäure, einem Metallsalz der Anthranilsäure und einem Polyamin eingesetzt werden, wie in EP-A-0 636 636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA®-3 der Fa. Shell und ARUSR® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildender Verbindung und eine oder mehrere Metallocenverbindungen z.B. der Formel (II) eingesetzt. Die benötigten Mengen an Antistatikum können jedoch, je nach Art des eingesetzten Antistatikums, in weiten Bereichen schwanken.
Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsystem treten keine Beläge oder Verbackungen auf.

Die erfindungsgemäßen Verbindungen der Formel (I) sowie diese Verbindungen enthaltenden erfindungsgemäßen Katalysatorsysteme zeichnen sich dadurch aus, daß die Ausgangsstoffe nicht krebserregend, erbgutverändernd oder extrem toxisch sind. Die gute Löslichkeit der Verbindungen der Formel (I) führt zudem zu nahezu vollständig umgesetzten Katalysatorsystemen. Dies hat hohe Kosteneinsparungen und somit eine vorteilhafte wirtschaftliche Nutzung zur Folge.

Die nach dem erfindungsgemäßen Verfahren hergestellten Polymere sind insbesondere zur Herstellung reißfester, harter und steifer Formkörper wie Fasern, Filamente, Spritzgußteile, Folien, Platten oder Großhohlkörpern (z.B. Rohre) geeignet.

Die oben allgemein beschriebene und gültige Herstellung eines möglichen Katalysatorsystems kann vorzugsweise nach folgender Reihenfolge ablaufen:

In einer ersten Stufe A wird ein anorganisches Trägermaterial wie unter C beschrieben mit einer Metallverbindung der Formel (III) umgesetzt. Vorzugsweise wird die Metallverbindung der allgemeinen Formel (III) als Lösung zu einer Suspension des Trägers gegeben. Als Lösungs- bzw. Suspensionsmittel sind die unter B beschriebenen zu verwenden. Die Menge an Metallverbindungen der Formel (III) kann in weiten Grenzen variieren, die Mindestmenge richtet sich nach der Anzahl der Hydroxygruppen des Trägers. Temperatur, Reaktionszeiten und Drücke sind an sich unkritisch, bevorzugt sind die unter Stufe B beschriebenen Temperaturen und Reaktionszeiten. Es hat sich als geeignet erwiesen, nach Trägervorbehandlung die überschüssige Metallverbindung der Formel (III) durch Auswaschen, beispielsweise mit Kohlenwasserstoffen wie Pentan, Hexan, Ethylbenzol oder Heptan, zu entfernen und den Träger zu trocknen.

Dieses Material wird nun in einer weiteren Stufe B mit einem Metallkomplex der Formel (II) und einer Metalloceniumion-bildenden Verbindung vermischt. Es können auch Mischungen verschiedener Metallocenkomplexe eingesetzt werden.

Als geeignete Metalloceniumion-bildende Verbindungen sind insbesondere die erfindungsgemäßen Verbindungen der Formel (I) zu verwenden. Die Bedingungen für die Umsetzung des Metallocenkomplexes mit der Metalloceniumion-bildenden Verbindung der Formel (I) sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind. Eine Menge von 0.1 bis 10 Gew.-% an Metallocenkomplexen, bezogen auf das anorganische Trägermaterial, ist besonders geeignet. Die Bedingungen für diese Umsetzung sind ebenfalls nicht kritisch. Temperaturen im Bereich von 20 bis 80°C und Reaktionszeiten im Bereich von 0.1 bis 20 Stunden haben sich als besonders geeignet erwiesen.

In einer weiteren Stufe C, der Aktivierungsstufe, wird das in Stufe B erhaltene Material mit einer Metallverbindung der allgemeinen Formel (III) umgesetzt. Diese Aktivierung kann zu einem beliebigen Zeitpunkt, d. h. vor, bei oder nach der Dosierung des in der Stufe B erhaltenen Materials in den Reaktor, erfolgen. Vorzugsweise erfolgt die Aktivierung nach der Dosierung des in Stufe B erhaltenen Materials im Reaktor.

Die erfindungsgemäßen Verbindungen der Formel (I) zeichnen sich insbesondere durch eine hohe Aktivität aus. Sie können lange gelagert werden, sind nicht pyrophor und gut löslich.

Die folgenden Beispiele dienen zur weiteren Erläuterung der Erfindung. Aufgrund der Luft- und Hydrolyseempfindlichkeit der Verbindungen wurden alle Arbeiten unter Schutzgasatmosphäre (Argon) innerhalb einer Glovebox oder unter Anwendung der Schlenktechnik ausgeführt. Alle Lösungsmittel (auch deuterierte Lösungsmittel) wurden getrocknet und unter Argon destilliert. Die verwendeten Verbindungen waren entweder kommerziell erhältlich [Pyrrol, Bortrichlorid in Hexan (1.0M), n-Butyllithium in Hexan (1.6M), Brompentafluorbenzol] oder wurden nach literaturbekannten Vorschriften dargestellt [Tris(pentafluorphenyl)boran, Pyrrolyllithium] .

NMR-Experimente wurden an Varian Unity Plus 600 , Bruker AC200 P und Bruker ARX300 Spektrometern durchgeführt. Chemische Verschiebungen beziehen sich auf Me₄Si [δ¹H (C₆D₅H) = 7.15, δ¹H (C₆D₅CD₂H) = 2.03, δ¹³C (C₆D₆) = 128.0, δ¹³C (C₆D₅CD₃) = 20.4], reines BF₃*OEt₂ [δ¹¹B = 0, Ξ (¹¹B) = 32.084 MHz], 2% Benzamid (¹⁵N), 0.2% Cr(acac)₃ in DMSO [δ¹⁵N = -279.3 bezüglich reines MeNO₂ δ¹⁵N = 0, Ξ(¹⁵N) = 10.133 MHz] , CFCl₃ [δ¹⁹F = 0, Ξ (¹⁹F) = 94.077 MHz]. Die Zuordnungen in den ¹H- und ¹³C-NMR Spektren wurden belegt durch APT (attached proton test), GCOSY (gradient enhanced ¹H-¹H COSY), 1D-TOCSY (¹H total correlation spectroscopy), 1D-NOEDIF (¹H nuclear overhauser effect difference spectroscopy), GHSQC (¹H-¹³C gradient enhanced heteronuclear single quantum correlation) und GHMBC (¹H-¹³C gradient enhanced heteronuclear multiple bond correlation) Experimente. ¹⁵N-NMR-Experimente wurden mit einer GHMBC Pulssequenz (ⁿJ(¹⁵N, ¹H) = 10Hz, n = 2, 3) detektiert.

IR Spektren wurden an einem Nicolet 5 DXC Fourier Transform IR Spektrometer aufgenommen, UV Spektren an einem TIDAS (Transputer Integriertes Dioden Array Spektrometer) der Firma J&M mittels einer Quarzglas-Tauchsonde der Firma HELLMA (Schichtdicke 1.00mm ± 0.001mm)). Schmelzpunkte wurden mittels Differential Scanning Calorimetry (DSC 2010 CE der Firma TA-Instruments) bestimmt. Für Elementaranalysen wurde ein Foss-Heraeus CHN-Rapid Elemental Analyzer verwendet.

### Beispiel 1

### Herstellung von N-(2-H-Pyrrolium)tris(pentafluorphenyl)borat

a) Lithium[tris(pentafluorphenyl)-N-pyrrolylborat] (1): 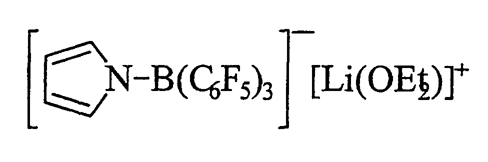 0.531g (7.27mmol) frisch hergestelltes Pyrrolyllithium und 3.724g (7.27mmol) Tris(pentafluorphenyl)boran wurden zusammen eingewogen und in 50ml Diethylether suspendiert. Nach dreistündigem Rühren bei 25°C wurde der Ether im Vakuum entfernt und der verbleibende Rückstand mit 100ml Pentan aufgenommen. Die entstandene Suspension wurde filtriert, der Rückstand dreimal mit je 20ml Pentan gewaschen und im Vakuum getrocknet. Als Produkt wurde ein farbloses, hydrolyseempfindliches Pulver mit ca. 1 Äquivalent Ether pro Molekül erhalten (4.5g; ca.: 91% Ausbeute). Aus einer Pentan/Ether-Lösung kristallisierten bei 8°C farblose Einkristalle, von denen eine Röntgenstrukturanalyse angefertigt wurde.
   Schmelzpunkt: 137.2°C.
   Zersetzungspunkt: 204.6°C.
   Elementaranalyse (%) von C₂₆H₁₄NBF₁₅LiO (Mᵣ = 659.1): berechnet: C 47.38, H 2.14, N 2.13; gefunden: C 47.63, H 2.95, N 1.90.
   MS(-m/z) = 578 (pyrrolylB(C₆F₅)₃).
   UV(CH₂Cl₂)(λ(int)) = 230.5(0.9158); 260.5(0.5837) nm.
   IR (UBr): ν = 2985.4, 2964.1, 2905.4, 1646.3, 1628.3, 1517.7, 1463.9, 1445.8, 1386.1, 1372.3, 1280.6, 1262.7, 1204.7, 1094.4, 1068.7, 1019.8, 979.6, 963.7, 867.8, 860.1, 802.4, 792.8, 772.5, 761.4, 750.8, 697.2, 685.2, 678.1, 622.9, 613.5, 575.8 cm⁻¹.
   ¹H-NMR (599.9MHz, C₆D₆, 298K): δ = 6.72 (m, ¹J(C,H) = 184.8Hz, 2H, H(2,5)), 5.84 (m, ¹J(C,H) = 171.9Hz, 2H, H(3,4)), 2.80 (q, ¹J(C,H) = 144.3Hz, 4H, OEt₂), 0.68 (t, ¹J(C,H) = 126.3Hz, 6H, OEt₂).
   ¹H-NMR (599.9MHz, TDF, 298K): δ = 6.45 (br., 2H, H(2,5)), 5.71 (m, 2H, H(3,4)), 3.38 (q, ³J(H,H) = 6.9Hz, ¹J(C,H) = 139.1Hz, 4H, OEt₂), 1.11 (t, ³J(H,H) = 6.9Hz, ¹J(C,H) = 125.6Hz, 6H, OEt₂). ¹³C{1H}-NMR (150.7MHz, C₆D₆, 298K): δ = 148.2 (dm, ¹J(F,C) = 234.3Hz, Ar^{F}ₒᵣₜₕₒ), 139.8 (dm, ¹J(F,C) = 249.8Hz, Ar^{F}ₚₐᵣₐ), 137.6 (dm, ¹J(F,C) = 248.5Hz, Ar^{F}ₘₑₜₐ), 121.3 (broad, Cᵢₚₛₒ), 125.0 (C(2,5)), 108.9 (C(3,4)), 65.9, 14.0 (OEt₂).
   ¹⁹F-NMR (282.4MHz, C₆D₆, 300K): δ = -134.9 (br., 2F, Fₒᵣₜₕₒ), -157.5 (t, 1F, Fₚₐᵣₐ), -162.7 (m, 2F, Fₘₑₜₐ).
   ¹¹B{¹H}-NMR (64.2MHz, C₆D₆, 300K): δ = -8.2 (ν½ = 50Hz).
   ¹¹B-NMR (192.2MHz, TDF, 298K) : δ = -8.8 (ν½ = 20Hz) .
   ⁷Li-NMR (77.8MHz, TDF, 300K) : δ = -2.6 (ν½ = 2Hz).
   ¹H,¹H-GCOSY (599.9/599.9MHz, C₆D₆, 298K): δ¹H/δ¹H = 6.72/5.84 (H(2,5)/ H(3,4)), 2.80/0.68 (OEt₂/ OEt₂).
   ¹H,¹³C-GHSQC (599.9/150.7MHz, C₆D₆, 298K): δ¹H/δ¹³C = 6.72/125.0 (H(2,5)/C(2,5)), 5.84/108.9 (H(3,4)/C(3,4)), 2.80/65.9; 0.68/14.0 (OEt₂) .
   ¹H, ¹³C-GHMBC (599.9/150.7MHz, C₆D₆, 298K): δ¹H/δ¹³C = 6.72/108.9 (H(2,5)/ C(3,4)), 5.84/125.0 (H(3,4)/ C(2,5)), 2.80/14.0; 0.68/65.9 (OEt₂) .
b) N-(2-H-Pyrrolium)tris(pentafluorphenyl)borat (2): 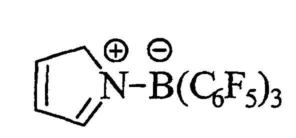 Zu einer Lösung von 1.50g (2.56mmol) Lithium[tris(pentafluorphenyl)-N-pyrrolylborat] in 60ml Diethylether wurden unter starkem Rühren langsam 3.0ml (3.00mmol) einer 1M Hydrogenchlorid/Ether-Lösung zugetropft. Nach 30 Minuten entfernte man den Diethylether im Vakuum und rührte den Rückstand in 20ml Pentan auf. Die entstehende Suspension wurde filtriert und der Rückstand mit Toluol dreimal kalt extrahiert. Die gelblichen Toluolphasen wurden vereinigt und das Lösungsmittel im Vakuum entfernt. Als Produkt wurde ein hellgelbes Pulver erhalten, das durch fraktionierte Kristallisation aus Toluol bei -18°C gereinigt wurde. Dabei entstanden Einkristalle, von denen eine Röntgenstrukturanalyse angefertigt wurde (0.852g, 1.47mmol, 57% Ausbeute).
   Schmelzpunkt: 178.7°C.
   Elementaranalyse (%) für C₂₂H₅NBF₁₅ (Mᵣ = 579.1): berechnet: C 45.63, H 0.87, N 2.42; gefunden: C 45.50, H 1.11, N 2.27.
   UV(CH₂Cl₂)(λ(int)) = 231.0(0.9482); 254.0(0.8525) nm.
   IR (KBr): ν = 2966.3, 2932.8, 1647.0, 1603.1, 1520.6, 1502.5, 1465.2, 1389.6, 1374.0, 1367.4, 1310.7, 1285.1, 1269.8, 1262.7, 1120.0, 1099.6, 1086.4, 1063.7, 1045.0, 972.3, 953.4, 911.3, 906.3, 800.5, 789.3, 773.6, 769.5, 744.6, 739.0, 703.8, 689.6, 682.8, 668.9, 625.7, 614.1, 577.5 cm⁻¹.
   ¹H-NMR (599.9MHz, C₆D₆, 298K): δ = 7.35 (br., ¹H, H(2)), 6.34 (m, ¹H, H(4)), 5.45 (m, 1H, H(3)), 3.53 (br., 2H, H(5)).
   ¹H-NMR (599.9MHz, C₇D₈, 213K): δ = 6.93 (br., 1H, H(2)), 6.07 (m, 1H, H(4)), 5.20 (m, 1H, H(3)), 3.08 (br., 2H, H(5)).
   ¹³C-NMR (150.7MHz, C₆D₆, 298K): δ = 171.1 (C(2)), 155.5 (C(4)), 148.2 (dm, ¹J(F,C) = 241.4Hz, Ar^{F}ₒᵣₜₕₒ), 140.6 (dm, ¹J(F,C) = 253.4Hz, Ar^{F}ₚₐᵣₐ), 137.6 (dm, 1J(F,C) = 249.1Hz, Ar^{F}ₘₑₜₐ), 127.2 (C(3)), 118.5 (br., Cᵢₚₛₒ), 65.5 (C(5)).
   ¹¹B-NMR (192.2MHz, C₇D₈, 298K): δ = -7.6 (ν½ = 90Hz).
   ¹⁹F-NMR (563.7MHz, C₇D₈, 298K): δ = -132.3 (m, 2F, Fₒᵣₜₕₒ), -155.7 (t, 1F, Fₚₐᵣₐ), -162.6 (m, 2F, Fₘₑₜₐ).
   ¹H-NOEDIF ((599.9MHz, C₆D₆, 298K): δ(Einstrahlpunkt)/δ(Antwort) = 7.35 (H(2))/ 5.45 (H(3)) ,
   GCOSY (599.9/599.9MHz, C₆D₆, 298K): δ¹H/δ¹H = 7.35/3.53 (H(2)/H(5)), 6.34/5.45 (H(4)/H(3)).
   ¹H,¹³C-GHSQC (599.9/150.7MHz, C₆D₆, 298K): δ1H/δ13C = 7.35/171.1 (H(2)/C(2)), 6.34/155.5 (H(4)/C(4)), 5.45/127.2 (H(3)/C(3)), 3.53/65.5 (H(5)/C(5)).
   ¹H,¹³C-GHMBC (599.9/150.7MHz, C₆D₆, 298K): δ1H/δ13C = 7.35/155.5, 127.2, 65.5 (H(2)/C(4,3,5)), 6.34/171.1, 127.2, 65.5 (H(4)/C(2,3,5)), 5.45/171.1, 155.5, 65.5 (H(3)/C(2,3,5), 3.53/171.1, 155.5, 127.2 (H(5)/C(2,3,4)).
   ¹H,¹⁵N-GHMBC (599.9/60.7MHz, C₇D₈, 213K): δ1H/δ15N = 6.93, 6.07, 5.20/-145 (H(2,4,3)/N(1)).

### Polymerisationsbeispiele und -vergleichsbeispiele

### Polymerisation von Ethen

In einem Büchi Laborautoklaven wurde eine Lösung aus 300ml Toluol und 2-3ml Tri(isobutyl)aluminium eine Stunde auf die gewählte Reaktionstemperatur temperiert und anschließend eine Stunde mit Ethen gesättigt. Danach wurde der Katalysator durch Behandlung der Organometallverbindung mit dem Aktivator in 3ml Toluol frisch generiert und die Toluollösung direkt in den Autoklaven injiziert. Die Polymerisation wurde durch Zugabe von 20ml HCl/Methanol (1:5; V:V) abgebrochen. Das erhaltene Polymer wurde nacheinander mit HCl, Wasser, Methanol und Aceton gewaschen und anschließend getrocknet. Die eingesetzten Mengen an erfindungsgemäßen Aktivator in den erfindungsgemäßen Beispielen (Aktivator: N-(2-H-Pyrrolium)tris(pentafluorphenyl)borat = HBNF) und den Vergleichsbeispielen (Aktivator: MAO, B(C₆F₅)₃, Bu₃NHBPH₄) sowie Angaben zu den erhaltenen Polymeren sind in Tabelle 1 aufgeführt.

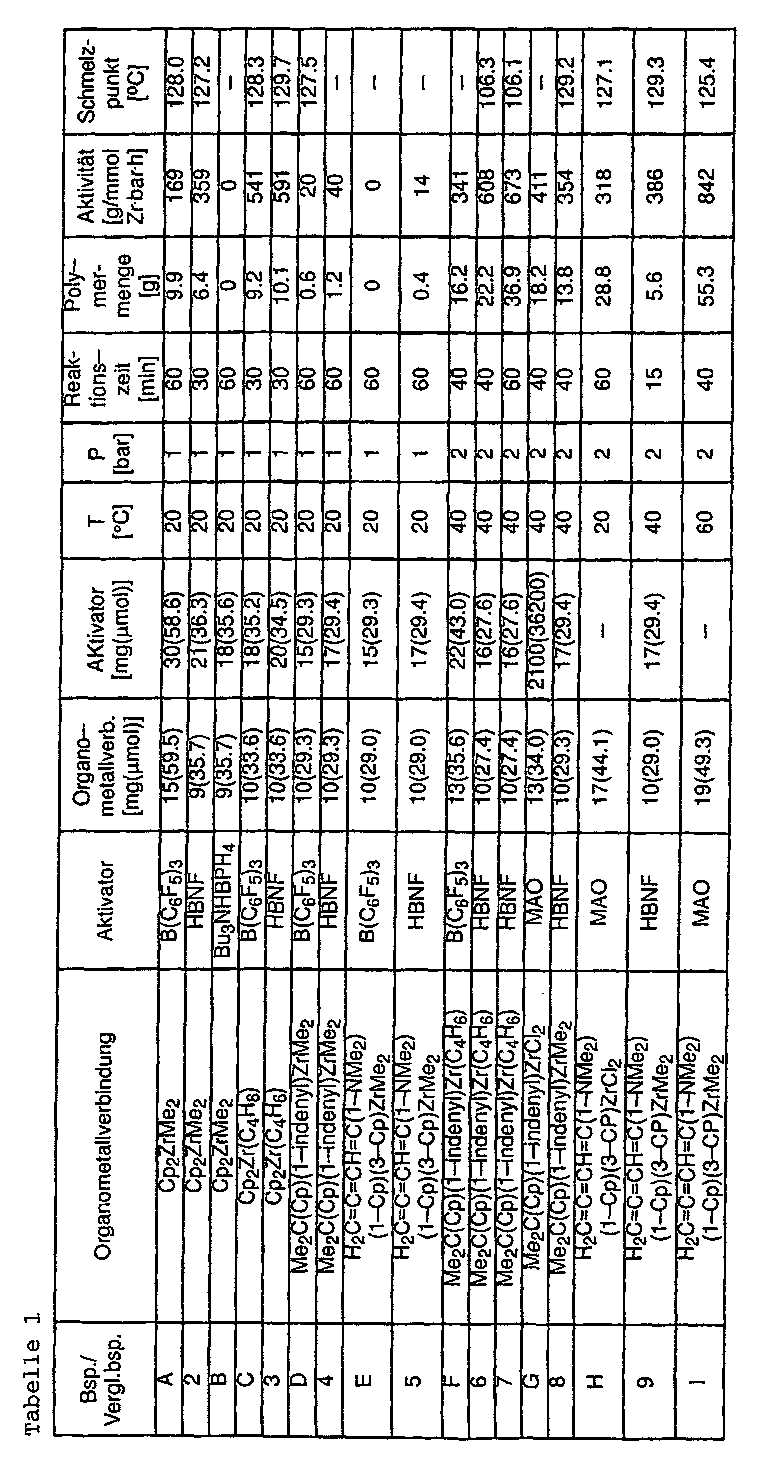

### Polymerisation von Propen

Die Polymerisation wurde auf die selbe Weise wie die Polymerisation von Ethen durchgeführt, jedoch wurde Propen anstelle von Ethen verwendet. Die eingesetzten Mengen an erfindungsgemäßen Aktivator in den erfindungsgemäßen Beispielen (Aktivator: HBNF) und den Vergleichsbeispielen (Aktivator: MAO, B(C₆F₅)₃) sowie Angaben zu den erhaltenen Polymeren sind in Tabelle 2 aufgeführt.

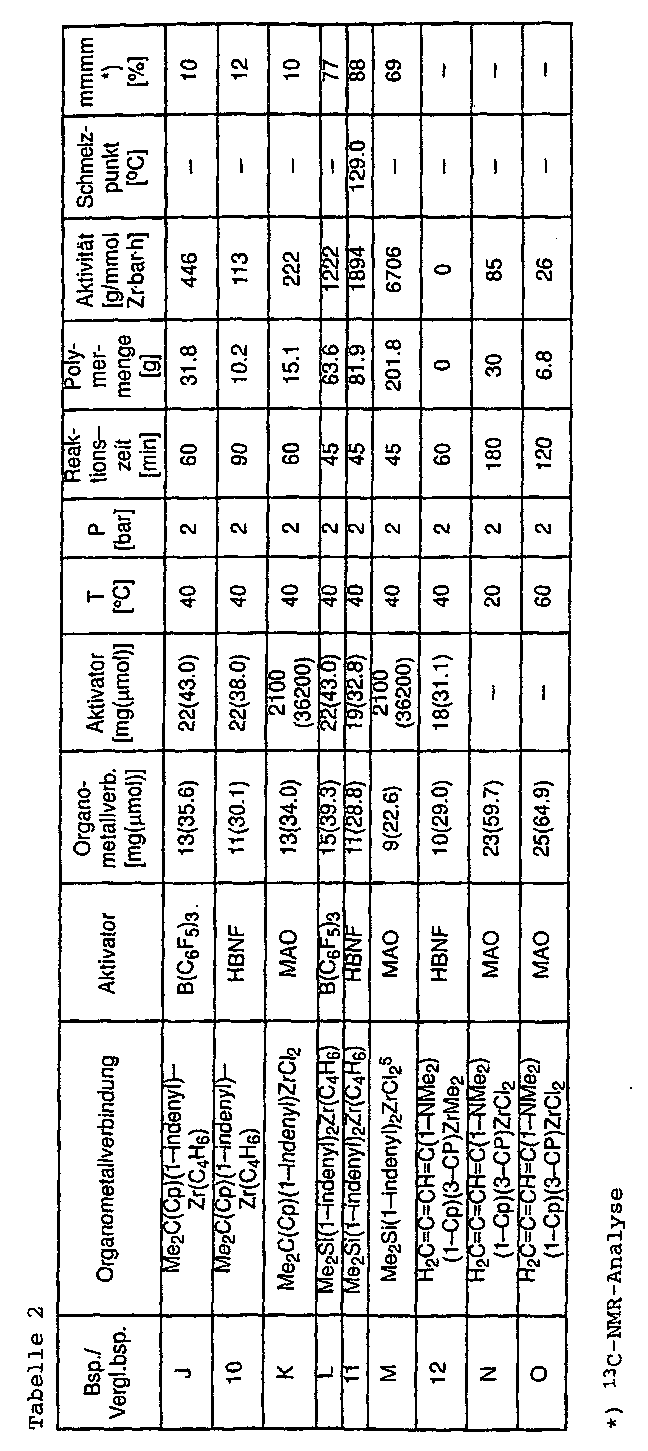

## Patentansprüche

1. Chemische verbindung der Formel (I),
(C₆R¹ ₅)₃MR² (I)
worin die Reste
R¹ gleich oder verschieden sind und ein Wasserstoffatom, ein Halogenatom, C₁-C₂₀-Alkyl, C₆-C₁₄-Aryl, C₁-C₁₀-Alkoxy, C₂-C₁₀-Alkenyl, C₇-C₂₀-Arylalkyl, C₇-C₂₀-Alkylaryl, C₆-C₁₀-Aryloxy, C₁-C₁₀-Halogenalkyl, C₆-C₁₀-Halogenaryl, C₂-C₁₀-Alkinyl oder C₃-C₂₀-Alkylsilyl,
M ein Element der III. Hauptgruppe des Periodensystems der Elemente, und
R² einen gegebenenfalls substituierten Heterocyclus bedeutet,
**dadurch gekennzeichnet, daß** sie Balzartig aufgebaut ist.

2. Salzartige chemische Verbindung der Formel (I) nach Anspruch 1, **dadurch gekennzeichnet, daß** sie durch Protonieren der Reaktionsprodukte von Verbindungen von Heterocyclen R² mit Elementen der I. oder II. Hauptgruppe des Periodensystems der Elemente und Verbindungen der Formel (C₆R¹₅)₃M erhältlich ist.

3. Chemische Verbindung der Formel (I) nach Anspruch 1 oder 2, **dadurch gekennzeichnet, daß** der Heterocyclus ein Pyrrolium, Indolium oder Imidazolium ist.

4. Salzartige chemische Verbindung der Formel I nach einem der Ansprüche 1 bis 3, **dadurch gekennzeichnet, daß** M Aluminium oder Bor bedeutet.

5. Salzartige chemische Verbindung nach einem der Ansprüche 1 bis 4, **dadurch gekennzeichnet, daß** der Heterocyclus R² unsubstituiert oder mit mindestens einem Halogenatom, C₁-C₂₀-Alkyl, C₁-C₁₀-Alkoxy, C₂-C₁₀-Alkenyl, C₇-C₂₀-Arylalkyl, C₇-C₂₀-Alkylaryl, C₆-C₁₀-Aryloxy, C₁-C₂₀-Halogenalkyl, C₆-C₁₄-Halogenaryl, C₂-C₁₀-Alkinyl oder C₃-C₂₀-Alkylsilyl substituiert ist.

6. Salzartige chemische Verbindung nach einem der Ansprüche 1 bis 5, **dadurch gekennzeichnet, daß** der Heterocyclus R² unsubstituiert ist.

7. Verfahren zur Herstellung von Verbindungen der Formel (I) nach einem der Ansprüche 1 bis 6, in dem zunächst Verbindungen von Heterocyclen R² mit Elementen der I. oder II. Hauptgruppe des Periodensystems der Elemente mit Verbindungen der Formel (C₆R¹₅)₃M in einem Lösungsmittel zu Verbindungen der Formel [ (C₆R¹₅)₃MR²]⁻ umgesetzt werden, die anschließend durch Umsetzung mit einem Protonendonor protoniert werden, wobei R¹, M und R² die in Formel (I) angegebene Bedeutung haben.

8. Katalysatorsysteme, welche mindestens eine Organoübergangsmetallverbindung (A), mindestens eine Verbindung der Formel (I) nach einem der Ansprüche 1 bis 6, gegebenenfalls eine Alkylverbindung (B) eines Elementes der III. und IV. Gruppe des Periodensystems der Elemente und gegebenenfalls mindestens eine Trägerkomponente (C) enthalten.

9. Verfahren zur Polymerisation von Olefinen, **dadurch gekennzeichnet, daß** die Polymerisation in Gegenwart eines Katalysatorsystems gemäß Anspruch 8 durchgeführt wird.

## Claims

1. A chemical compound of the formula (I),
(C₆R¹ ₅)₃MR² (I)
where
R¹ are identical or different and are each a hydrogen atom, a halogen atom, C₁-C₂₀-alkyl, C₆-C₁₄-aryl, C₁-C₁₀-alkoxy, C₂-C₁₀-alkenyl, C₇-C₂₀-arylalkyl, C₇-C₂₀-alkylaryl, C₆-C₁₀-aryloxy, C₁-C₁₀-haloalkyl, C₆-C₁₀-haloaryl, C₂-C₁₀-alkynyl or C₃-C₂₀-alkylsilyl,
M is an element of main group III of the Periodic Table of the Elements, and
R² is a substituted or unsubstituted heterocycle,
which has a salt-like structure.

2. A salt-like chemical compound of the formula (I) as claimed in claim 1, which is obtainable by protonating the reaction products of compounds of heterocycles R² containing elements of main group I or II of the Periodic Table of the Elements and compounds of the formula (C₆R¹₅)₃M·

3. A chemical compound of the formula (I) as claimed in claim 1 or 2, wherein the heterocycle is a pyrrolium, indolium or imidazolium group.

4. A salt-like chemical compound of the formula I as claimed in any of claims 1 to 3, wherein M is aluminum or boron.

5. A salt-like chemical compound as claimed in any of claims 1 to 4, wherein the heterocycle R² is unsubstituted or substituted by at least one halogen atom, C₁-C₂₀-alkyl, C₁-C₁₀-alkoxy, C₂-C₁₀-alkenyl, C₇-C₂₀-arylalkyl, C₇-C₂₀-alkylaryl, C₆-C₁₀-aryloxy, C₁-C₂₀-haloalkyl, C₆-C₁₄-haloaryl, C₂-C₁₀-alkynyl or C₃-C₂₀-alkylsilyl.

6. A salt-like chemical compound as claimed in any of claims 1 to 5, wherein the heterocycle R² is unsubstituted.

7. A process for preparing compounds of the formula (I) as claimed in any of claims 1 to 6, in which compounds of heterocycles R² containing elements of main group I or II of the Periodic Table of the Elements are firstly reacted with compounds of the formula (C₆R¹₅)₃M in a solvent to form compounds of the formula [(C₆R¹₅)₃MR²]⁻ which are subsequently protonated by reaction with a proton donor, where R¹, M and R² are as defined in formula (I).

8. A catalyst system comprising at least one organometallic compound (A) of a transition metal, at least one compound of the formula (I) as claimed in any of claims 1 to 6, if desired an alkyl compound (B) of an element of group III or IV of the Periodic Table of the Elements and, if desired, at least one support component (C).

9. A process for the polymerization of olefins, wherein the polymerization is carried out in the presence of a catalyst system as claimed in claim 8.

## Revendications

1. Composé chimique de formule (I),
(C₆R¹ ₅)₃MR² (I)
dans laquelle les groupes
R¹ sont identiques ou différents et représentent un atome d'hydrogène, un atome d'halogène, un groupe alkyle en C₁ à C₂₀, aryle en C₆ à C₁₄, alcoxy en C₁ à C₁₀, alcényle en C₂ à C₁₀, arylalkyle en C₇ à C₂₀, alkylaryle en C₇ à C₂₀, aryloxy en C₆ à C₁₀, halogénoalkyle en C₁ à C₁₀, halogénoaryle en C₆ à C₁₀, alcynyle en C₂ à C₁₀, alkylsilyle en C₃ à C₂₀,
M représente un élément du groupe principal III de la . Classification Périodique des Eléments, et
R² représente un hétérocycle éventuellement substitué, **caractérisé en ce qu'**il est salin.

2. Composé chimique salin de formule (I) selon la revendication 1, **caractérisé en ce qu'**il peut être obtenu par protonation des produits de la réaction de composés d'hétérocycles R² contenant des éléments du groupe principal I ou II de la Classification Périodique des Eléments et des composés de formule (C₆R¹₅)₃M.

3. Composé chimique salin de formule (I) selon la revendication 1 ou 2, **caractérisé en ce que** l'hétérocycle est un pyrrolium, un indolium ou un imidazolium.

4. Composé chimique salin de formule (I) selon l'une quelconque des revendications 1 à 3, **caractérisé en ce que** M représente un atome d'aluminium ou de bore.

5. Composé chimique salin selon l'une quelconque des revendications 1 à 4, **caractérisé en ce que** l'hétérocycle R² est non substitué ou substitué par au moins un atome d'halogène, un groupe alkyle en C₁ à C₂₀, alcoxy en C₁ à C₁₀, alcényle en C₂ à C₁₀, arylalkyle en C₇ à C₂₀, alkylaryle en C₇ à C₂₀, aryloxy en C₆ à C₁₀, halogénoalkyle en C₁ à C₁₀, halogénoaryle en C₆ à C₁₀, alcynyle en C₂ à C₁₀, alkylsilyle en C₃ à C₂₀.

6. Composé chimique salin de formule (I) selon l'une quelconque des revendications 1 à 5, **caractérisé en ce que** l'hétérocycle R² est non substitué.

7. Procédé de production de composés de formule (I) selon l'une quelconque des revendications 1 à 6, dans lequel on fait d'abord réagir des composés d'hétérocycles R² contenant des éléments du groupe principal I ou II de la Classification Périodique des Eléments avec des composés de formule (C₆R¹₅)₃M dans un solvant pour former des composés de formule [(C₆R¹₅)₃MR²]⁻, que l'on protone ensuite par réaction avec un donneur de protons, les groupes R¹, M et R² ayant la signification indiquée dans la formule (I).

8. Systèmes de catalyseurs, lesquels contiennent au moins un composé organique de métal de transition (A), au moins un composé de formule (I) selon l'une quelconque des revendications 1 à 6, éventuellement un composé alkylique (B) d'un élément du groupe III et IV de la Classification Périodique des Eléments et éventuellement au moins un composant support (C).

9. Procédé de polymérisation d'oléfines, **caractérisé en ce que** la polymérisation est réalisée en présence d'un système de catalyseur selon la revendication 8.
